# EUROPÄISCHE PATENTSCHRIFT

(11) **EP 4 506 678 B1**
(45) Veröffentlichungstag und Bekanntmachung des Hinweises auf die Patenterteilung: **18.02.2026**
(21) Anmeldenummer: 23190548.0
(22) Anmeldetag: 09.08.2023
(51) Int. Cl.: G01N 21/05, G01N 21/552, G01N 21/3577, G01N 21/35, G01N 21/84, G01N 21/85

(54) **FLUSSZELLE FÜR OPTISCHE MESSUNGEN, OPTISCHES MODUL UND SPEKTROMETER**
FLOW CELL FOR OPTICAL MEASUREMENTS, OPTICAL MODULE AND SPECTROMETER
CELLULE À FLUX POUR MESURES OPTIQUES, MODULE OPTIQUE ET SPECTROMÈTRE

(43) Veröffentlichungstag der Anmeldung: 12.02.2025
(73) Patentinhaber: Irubis GmbH, 80335 München (DE)
(72) Erfinder: SYKORA-MIRLE, Lorenz, 80335 München (DE)
(74) Vertreter: Pfenning, Meinig & Partner mbB

(56) Entgegenhaltungen:
- JP-A- H06 331 541
- BUSCH CHRISTIAN ET AL: "A mobile setup for simultaneous and in situ neutron reflectivity, infrared spectroscopy, and ellipsometry studies", REVIEW OF SCIENTIFIC INSTRUMENTS, AMERICAN INSTITUTE OF PHYSICS, 2 HUNTINGTON QUADRANGLE, MELVILLE, NY 11747, vol. 93, no. 11, 10 November 2022 (2022-11-10), XP012269924, ISSN: 0034-6748, [retrieved on 20221110], DOI: 10.1063/5.0118329
- BRAVO-SUAREZ J J ET AL: "Design characteristics of in situ and operando ultraviolet-visible and vibrational spectroscopic reaction cells for heterogeneous catalysis", CATALYSIS REVIEWS: SCIENCE AND ENGINEERING, MARCEL DEKKER INC. NEW YORK, US, vol. 59, no. 4, 2 October 2017 (2017-10-02), pages 295 - 445, XP009539694, ISSN: 0161-4940, DOI: 10.1080/01614940.2017.1360071

## Beschreibung

Die vorliegende Erfindung betrifft eine Flusszelle für optische Messungen. Die Flusszelle umfasst einen Grundkörper mit mindestens einem Zulauf und mindestens einem Ablauf für zu messende Substanzen und eine an einer ersten Außenseite des Grundköpers angeordnete Apertur, wobei an der ersten Außenseite des Grundkörpers eine Aussparung vorgesehen ist, die eine mit dem mindestens einen Zulauf und dem mindestens einen Ablauf verbundene Flusszellenmesskammer enthält. Die Flusszelle umfasst eine einen ATR-Kristall und mindestens ein erstes Dichtungselement zur Abdichtung der Flusszellenmesskammer umfassende zwischen der Apertur und mindestens einem ersten Wandungsbereich der Aussparung eingeklemmte Anordnung, wobei das mindestens eine erste Dichtungselement auf einer von der Apertur abgewandten Seite des ATR-Kristalls angeordnet ist. Die vorliegende Erfindung betrifft ferner ein die erfindungsgemäße Flusszelle umfassendes optisches Modul sowie ein das optische Modul umfassendes Spektrometer.

In den letzten Jahrzehnten hat das wachsende Interesse an der Integration kontinuierlicher Bioprozesse zur Entwicklung und Einführung prozessanalytischer Technologien (PATs) geführt, die in der Lage sind, die wichtigsten Prozessparameter in Echtzeit zu überwachen. Die Anpassung an die kontinuierliche Verarbeitung zielt darauf ab, ein besseres Verständnis des Prozesses zu erreichen. Dies führt zu einer Verkürzung der Produktionszyklen und letztlich zu einer Steigerung der Ausbeute und Produktivität.

Die Proteinkonzentration ist ein grundlegender Parameter, der in nachgeschalteten Prozessen überwacht werden muss. Daher besteht ein zunehmender Bedarf, die Messung der Proteinkonzentration von der Offline- auf die Inline-Analyse umzustellen. Zu diesem Zweck haben sich spektroskopische Techniken als leistungsfähige Analyseinstrumente erwiesen, die eine kontinuierliche und gleichzeitige Überwachung kritischer Qualitätsmerkmale ermöglichen, insbesondere der Konzentrationen von Metaboliten, Nährstoffen und Hilfsstoffen.

Zur optischen bzw. spektroskopischen Messung für die Inline-Analyse kann eine Flusszelle als Bestandteil eines optischen Moduls eines Spektrometers eingesetzt werden. Dabei kann ein Teil der Reaktionsmischung während dem Prozess aus dem Reaktor abgeleitet, anschließend durch die Flusszelle geleitet und danach wieder zurück in den Reaktor geleitet werden, wobei die Reaktionsmischung beim Leiten durch die Flusszelle innerhalb einer dortigen Messkammer optisch bzw. spektroskopisch vermessen wird, um so beispielsweise Konzentrationen von Metaboliten, Nährstoffen und Hilfsstoffen in der Reaktionsmischung zu bestimmen.

Aus Christian Busch et al. "A mobile setup for simultaneous and in situ neutron reflectivity, infrared spectroscopy, and ellipsometry studies", REVIEW OF SCIENTIFIC INSTRUMENTS, AMERICAN INSTITUTE OF PHYSICS, 2 HUNTINGTON QUADRANGLE, MELVILLE, NY 11747, Bd. 93, Nr. 11, 10. November 2022 ist eine Flusszelle für optische Messungen bekannt, umfassend einen Grundkörper aus PEEK mit einem Zulauf und einem Ablauf, wobei in einer ersten Außenseite des Grundkörpers eine Aussparung vorgesehen ist, die eine mit dem Zulauf und dem Ablauf verbundene Flusszellenmesskammer und einen 0-Ring enthält. Die Flusszelle enthält zudem einen ATR-Kristall in Form eines Silizium-Prismas. Der Grundkörper und das Prisma werden mittels Schraubverbindungen zwischen zwei Klemmplatten eingeklemmt.

JP H06 331541 A offenbart eine Flusszelle mit einem Grundkörper aus PTFE mit einem Zulauf und einem Ablauf, wobei an einer ersten Außenseite des Grundkörpers eine Aussparung vorgesehen ist, die eine mit dem Zulauf und dem Ablauf verbundene Flusszellenmesskammer enthält. Die Flusszelle umfasst zudem einen ATR-Kristall. Zwischen dem Grundkörper und dem ATR-Kristall ist ein Dichtungselement eingeklemmt, wobei sich der Grundkörper, der ATR-Kristall und das Dichtungselement in einem Edelstahlrahmen befinden und mittels einer Klemmplatte und Schrauben zusammengepresst werden. Der Edelstahlrahmen weist Öffnungen für den Messlichtpfad auf.

Bravo-Suarez J J et al. "Design characteristics of in situ and operando ultraviolet-visible and vibrational spectroscopic reaction cells for heterogeneous catalysis", CATALYSIS REVIEWS: SCIENCE AND ENGINEERING, MARCEL DEKKER INC. NEW YORK, US, Bd. 59, Nr. 4, 2. Oktober 2017 (2017-10-02), Seiten 295-445 beschreibt eine Flusszelle mit einem ersten Grundkörper aus Edelstahl mit einem Zulauf und einem Ablauf, wobei an einer ersten Außenseite des Grundkörpers eine Nut für einen 0-Ring vorgesehen ist, der eine Flusszellenmesskammer begrenzt. Die Kammer umfasst einen zweiten Grundkörper und einen ATR-Kristall. Der ATR-Kristall ist in einer Rille im zweiten Grundkörper angeordnet. Der erste Grundkörper wird mit Schrauben am zweiten Grundkörper fixiert.

Probleme bei solchen Messungen können vor allem durch Verunreinigungen mit Mikroorganismen, wie z.B. Bakterien, Viren oder Pilzsporen, oder durch Ablagerungen von Mikroorganismen, Biomolekülen oder Zellresten in der Flusszellenmesskammer entstehen. So können Mikroorganismen, die von außen in die Flusszellenmesskammer gelangen, mit der gemessenen Reaktionsmischung in den Reaktor geleitet werden, was zu einer Verunreinigung des Reaktors und des darin hergestellten Reaktionsprodukts führt. Ferner können Ablagerungen von Mikroorganismen, Biomolekülen oder Zellresten in der Flusszellenmesskammer zu einer Verschlechterung der optischen Messungen führen.

Ausgehend hiervon war es die Aufgabe der vorliegenden Erfindung eine Flusszelle für optische Messungen bereitzustellen, mit der Verunreinigungen der Flusszellenmesskammer und/oder der darin gemessenen Substanzen besser vermieden werden können.

Diese Aufgabe wird bezüglich einer Flusszelle mit den Merkmalen des Patentanspruchs 1, bezüglich eines optischen Moduls mit den Merkmalen des Patentanspruchs 12 und bezüglich eines Spektrometers mit den Merkmalen des Patentanspruchs 15 gelöst. Die jeweilig abhängigen Patentansprüche stellen dabei vorteilhafte Weiterbildungen dar.

Erfindungsgemäß wird somit eine Durchflusszelle für optische Messungen (bzw. zur Verwendung in optischen Messungen) angegeben, die einen Grundkörper mit mindestens einem Zulauf (für zu messende Substanzen) und mindestens einem Ablauf (für gemessene Substanzen) sowie eine an einer ersten Außenseite des Grundköpers angeordnete Apertur umfasst, wobei an der ersten Außenseite des Grundkörpers eine Aussparung vorgesehen ist, die eine mit dem mindestens einen Zulauf und dem mindestens einen Ablauf (fluidisch) verbundene Flusszellenmesskammer enthält, wobei der Grundkörper aus mindestens einem Material bestehen kann, welches einen ersten thermischen Ausdehnungskoeffizienten aufweist und die Apertur aus mindestens einem Material bestehen kann, welches einen sich vom ersten thermischen Ausdehnungskoeffizienten unterscheidenden zweiten thermischen Ausdehnungskoeffizienten aufweist.

Die erste thermische Ausdehnungskoeffizient und der zweite thermische Ausdehnungskoeffizient können beispielsweise bestimmt werden mittels Dilatometrie, z.B. gemäß ISO 11359-2:2021-11.

Vorzugsweise unterscheidet sich der zweite thermische Ausdehnungskoeffizient um mindestens 10 · 10⁻⁶ K⁻¹, bevorzugt um mindestens 20 · 10⁻⁶ K⁻¹, besonders bevorzugt um mindestens 50 · 10⁻⁶ K⁻¹, ganz besonders bevorzugt um mindestens 80 · 10⁻⁶ K⁻¹, z.B. um 80 · 10⁻⁶ K⁻¹ bis 200 · 10⁻⁶ K⁻¹ vom ersten thermischen Ausdehnungskoeffizienten.

Ferner umfasst die Flusszelle eine einen ATR-Kristall und mindestens ein erstes Dichtungselement zur Abdichtung der Flusszellenmesskammer umfassende zwischen der Apertur und mindestens einem (der Apertur zugewandten) ersten Wandungsbereich der Aussparung eingeklemmte Anordnung, wobei das mindestens eine erste Dichtungselement auf einer von der Apertur abgewandten Seite des ATR-Kristalls angeordnet ist.

Unter einem ATR-Kristall wird dabei ein Element verstanden, dass in der ATR-Infrarotspektroskopie (ATR = "attenuated total reflection") als ATR-Kristall bzw. ATR-Element eingesetzt werden kann.

Die Apertur kann über mindestens ein erstes Fixierungsmittel so an mindestens einer ersten Fixierungsstelle am Grundkörper fixierbar oder fixiert sein, dass der Grundkörper und die Apertur an der mindestens einen ersten Fixierungsstelle in einer parallel zur ersten Außenseite des Grundkörpers verlaufenden x-Richtung, in einer parallel zur ersten Außenseite des Grundkörpers verlaufenden (und senkrecht zur x-Richtung verlaufenden) y-Richtung und in einer senkrecht zur ersten Außenseite des Grundkörpers verlaufenden z-Richtung im Wesentlichen nicht relativ zueinander bewegbar sind. Unter "im Wesentlichen nicht relativ zueinander bewegbar" kann dabei verstanden werden, dass der Grundkörper und die Apertur an der mindestens einen ersten Fixierungsstelle in der x-Richtung, in der y-Richtung und in der z-Richtung jeweils um weniger als 10 µm, bevorzugt um höchstens 9 µm, besonders bevorzugt um höchstens 5 µm, ganz besonders bevorzugt um höchstens 1 µm, relativ zueinander bewegbar sind. Besonders bevorzugt sind der Grundkörper und die Apertur an der mindestens einen ersten Fixierungsstelle in der x-Richtung, in der y-Richtung und in der z-Richtung jeweils überhaupt nicht relativ zueinander bewegbar.

Zudem kann die Apertur über mindestens ein zweites Fixierungsmittel so an mindestens einer zweiten Fixierungsstelle am Grundkörper fixierbar oder fixiert sein, dass der Grundkörper und die Apertur an der mindestens einen zweiten Fixierungsstelle in der z-Richtung im Wesentlichen nicht relativ zueinander bewegbar sind und in der x-Richtung sowie in der y-Richtung jeweils nur in dem Maße relativ zueinander bewegbar sind, dass bei Temperaturänderungen (vorzugsweise von bis zu 80 K, besonders bevorzugt von bis zu 120 K, z.B. von 10 K bis 130 K) erfolgende unterschiedliche Ausdehnungen und/oder Kontraktionen der Komponenten der Flusszelle (insbesondere des Grundkörpers und der Apertur) ausgeglichen werden können (bzw. so ausgeglichen werden können, dass durch die Temperaturänderungen keine Verbiegung oder eine Verbiegung von maximal 0,1 mm der Komponenten der Flusszelle - insbesondere des Grundkörpers und der Apertur - verursacht wird). Unter "im Wesentlichen nicht relativ zueinander bewegbar" kann dabei verstanden werden, dass der Grundkörper und die Apertur an der mindestens einen zweiten Fixierungsstelle in der z-Richtung um weniger als 10 µm, bevorzugt um höchstens 9 µm, besonders bevorzugt um höchstens 5 µm, ganz besonders bevorzugt um höchstens 1 µm, relativ zueinander bewegbar sind. Besonders bevorzugt sind der Grundkörper und die Apertur in der z-Richtung überhaupt nicht relativ zueinander bewegbar.

Als Wert für die Verbiegung der Komponenten (z.B. des Grundkörper und/oder der Apertur) kann dabei der Abstand zwischen einem Punkt der Komponente im unverbogenen Zustand in der Mitte (einer direkten Verbindungslinie) zwischen erster Fixierungsstelle und zweiter Fixierungsstelle und dem gleichen Punkt der Komponente im verbogenen Zustand bestimmt werden.

Der Grundkörper und die Apertur können aus verschiedenen Materialien bestehen, d.h. die Apertur kann aus einem anderen Material bestehen als der Grundkörper, sodass das Material der Apertur einen anderen thermischen Ausdehnungskoeffizienten aufweist als das Material des Grundkörpers. Durch die Ausführung der Flusszelle mit einem Grundkörper und einer Apertur aus verschiedenen Materialien können im Vergleich zu Flusszellen, bei denen Grundkörper und Apertur in einem einzigen Element aus einem Material verwirklicht sind, die verschiedenen Bereiche der Flusszelle besser an die jeweiligen speziellen Anforderungen angepasst werden.

Der Grundkörper kann eine Durchflussstruktur, z.B. eine Kanalstruktur, enthalten, durch welche die zu messenden bzw. gemessenen Substanzen durch die Flusszelle (bzw. vom Zulauf zur Flusszellenmesskammer und von der Flusszellenmesskammer zum Ablauf) geleitet werden. Beim Grundkörper kann es sich vorzugsweise um einen polymeren, z.B. thermoplastischen, Grundkörper handeln, welcher beispielsweise mittels 3D-Druck herstellbar ist. So kann auf einfache und günstige Weise ein Grundkörper mit einer geeigneten - möglicherweise komplexen - Kanalstruktur realisiert werden.

Die Apertur kann als Verbindungselement der Flusszelle zu einem Modulhauptkörper eines optischen Moduls dienen. Hierbei kann die Apertur aus einem härteren Material (vorzugsweise einer Legierung, z.B. Edelstahl) gefertigt sein als der Grundkörper, sodass auf diese Weise eine sehr feste Verbindung der Durchflusszelle mit dem Modulhauptkörper erreicht werden kann und ein zur Abdichtung der Verbindung zwischen Flusszelle und Modulhauptkörper verwendetes Dichtelement gut abdichten kann.

Die Apertur ist an der ersten Außenseite des Grundköpers angeordnet, an welcher auch die Aussparung vorgesehen ist, die die Flusszellenmesskammer enthält. Somit grenzt die Aussparung mit der Flusszellenmesskammer an die Apertur an. In diesem Bereich der Apertur kann die Aperturblende ausgeführt sein, sodass die Aperturblende an die Aussparung angrenzt.

Zwischen der Apertur und dem mindestens einen (der Apertur zugewandten) ersten Wandungsbereich der Aussparung ist die den ATR-Kristall und das mindestens eine erste Dichtungselement zur Abdichtung der Flusszellenmesskammer umfassende Anordnung eingeklemmt, wobei das mindestens eine erste Dichtungselement auf einer von der Apertur abgewandten Seite des ATR-Kristalls angeordnet ist. In der Folge kann die Flusszellenkammer nun so ausgebildet sein, dass sie durch den ATR-Kristall, das mindestens eine erste Dichtungselement und Wandungsbereiche der Aussparung begrenzt wird. Durch das Fixieren der Apertur am Grundkörper kann die den ATR-Kristall und das mindestens eine erste Dichtungselement zur Abdichtung der Flusszellenmesskammer umfassende Anordnung zwischen der Apertur und dem mindestens einen (der Apertur zugewandten) ersten Wandungsbereich der Aussparung eingeklemmt werden, um so eine Abdichtung der Flusszellenkammer zu erreichen.

Wenn der Grundkörper und die Apertur (sowie gegebenenfalls auch der ATR-Kristall und/oder das mindestens eine erste Dichtungselement) aus Materialien mit unterschiedlichem thermischen Ausdehnungskoeffizienten bestehen, kann es bei starker Temperaturänderung (z.B. beim Sterilisieren bzw. Autoklavieren der Durchflusszelle) zu einer unterschiedlichen Ausdehnung der Komponenten (d.h. des Grundkörpers und der Apertur sowie gegebenenfalls des ATR-Kristalls und/oder des mindestens einen ersten Dichtungselements) kommen. Wäre nun die Apertur so an dem Grundkörper fixiert, dass an allen Fixierungsstellen der Grundkörper und die Apertur in allen drei Raumrichtungen (d.h. in der x-Richtung, in der y-Richtung und in der z-Richtung) im Wesentlichen nicht relativ zueinander bewegbar sind, führt die unterschiedliche Ausdehnung der Komponenten zu Spannungen, die zu einer Verbiegung der Komponenten führen können, durch welche es zu einer Lockerung der eingeklemmten den ATR-Kristall und das mindestens eine erste Dichtungselement umfassenden Anordnung kommen kann, wodurch letztlich undichte Stellen in der Anordnung entstehen, an denen die Flusszellenmesskammer nicht mehr ausreichend abgedichtet ist, sodass einerseits die Reaktionsmischung durch die undichten Stellen nach außen gelangen kann und andererseits Verunreinigungen bzw. Mikroorganismen von außen durch die undichten Stellen in die Flusszellenkammer gelangen können.

Durch eine spezielle Befestigung der Apertur am Grundkörper kann dies verhindert werden. Hierbei ist die Apertur über das mindestens eine erste Fixierungsmittel so an der mindestens einen ersten Fixierungsstelle am Grundkörper fixierbar, dass der Grundkörper und die Apertur an der mindestens einen ersten Fixierungsstelle in alle drei Raumrichtungen (d.h. in der x-Richtung, in der y-Richtung und in der z-Richtung) im Wesentlichen nicht relativ zueinander bewegbar sind, wohingegen die Apertur über das mindestens eine zweite Fixierungsmittel so an der mindestens einen zweiten Fixierungsstelle am Grundkörper fixierbar ist, dass der Grundkörper und die Apertur an der mindestens einen zweiten Fixierungsstelle nur in der z-Richtung im Wesentlichen nicht relativ zueinander bewegbar sind und in der x-Richtung sowie in der y-Richtung jeweils nur in dem Maße relativ zueinander bewegbar sind, dass bei Temperaturänderungen erfolgende unterschiedliche Ausdehnungen und/oder Kontraktionen der Komponenten der Flusszelle ausgeglichen werden können. Somit garantiert das mindestens eine zweite Fixierungsmittel eine gewisse Beweglichkeit des Grundkörpers und der Apertur relativ zueinander in der x- und der y-Richtung, durch die unterschiedliche Ausdehnungen und/oder Kontraktionen der Komponenten ausgeglichen werden können. In der Folge kommt es bei starker Temperaturänderung (z.B. beim Sterilisieren bzw. Autoklavieren der Durchflusszelle) zwar immer noch zu einer unterschiedlichen Ausdehnung der Komponenten, doch führt diese (aufgrund der gewissen Beweglichkeit in der x- und der y-Richtung) nun nicht zu einer Verbiegung der Komponenten, sodass es zu keiner Lockerung der eingeklemmten den ATR-Kristall und das mindestens eine erste Dichtungselement umfassenden Anordnung kommt. Auf diese Weise kann somit das Entstehen undichter Stellen in der Anordnung, an denen die Flusszellenmesskammer nicht mehr ausreichend abgedichtet ist, verhindert werden. Folglich weist die Durchflusszelle - auch bei starker Temperaturänderung (z.B. beim Sterilisieren bzw. Autoklavieren der Durchflusszelle) - eine hohe Dichtigkeit auf, sodass Verunreinigungen nicht mehr durch undichte Stellen von außen in die Flusszellenkammer gelangen können. Demzufolge können Verunreinigungen der Flusszellenkammer sowie der darin gemessenen Substanzen durch von außen eindringende Verunreinigungen bzw. Mikroorganismen besser vermieden werden.

Vorteilhafterweise kann die erfindungsgemäße Durchflusszelle als austauschbares Produkt und/oder Einwegprodukt verwendet werden. Vorzugsweise handelt es sich bei der erfindungsgemäßen Durchflusszelle um ein austauschbares Produkt und/oder Einwegprodukt. Eine austauschbare Flusszelle ermöglicht es, diese zu sterilisieren und auszutauschen, da die Oberfläche von ATR Kristallen in Bioprozessen schnell verdreckt.

Eine bevorzugte Ausführungsform der erfindungsgemäßen Flusszelle zeichnet sich dadurch aus, dass die Apertur über das mindestens eine zweite Fixierungsmittel so an der mindestens einen zweiten Fixierungsstelle am Grundkörper fixierbar ist, dass der Grundkörper und die Apertur an der mindestens einen zweiten Fixierungsstelle in der z-Richtung im Wesentlichen nicht relativ zueinander bewegbar sind und in der x-Richtung sowie in der y-Richtung jeweils um mindestens 0,01 mm, bevorzugt mindestens 0,05 mm, besonders bevorzugt mindestens 0,1 mm, und/oder um höchstens 1 mm, bevorzugt höchstens 0,8 mm, besonders bevorzugt höchstens 0,5 mm, relativ zueinander bewegbar sind. Unter "im Wesentlichen nicht relativ zueinander bewegbar" kann dabei verstanden werden, dass der Grundkörper und die Apertur an der mindestens einen zweiten Fixierungsstelle in der z-Richtung um weniger als 10 µm, bevorzugt um höchstens 9 µm, besonders bevorzugt um höchstens 5 µm, ganz besonders bevorzugt um höchstens 1 µm, relativ zueinander bewegbar sind. Besonders bevorzugt sind der Grundkörper und die Apertur in der z-Richtung überhaupt nicht relativ zueinander bewegbar.

Eine weitere bevorzugte Ausführungsform der erfindungsgemäßen Flusszelle ist dadurch gekennzeichnet, dass
- das mindestens eine erste Fixierungsmittel ausgewählt ist aus der Gruppe bestehend aus Senkkopfschrauben, sowie Kombinationen hiervon, wobei das mindestens eine erste Fixierungsmittel vorzugsweise mindestens eine Senkkopfschraube ist, und/oder
- das mindestens eine zweite Fixierungsmittel ausgewählt ist aus der Gruppe bestehend aus Linsenkopfschrauben, Nieten, Zylinderkopfschrauben, sowie Kombinationen hiervon, wobei das mindestens eine erste Fixierungsmittel vorzugsweise mindestens eine Linsenkopfschraube ist

Mit diesen speziellen Fixierungsmitteln kann auf einfache Weise die gewünschte Unbeweglichkeit in allen drei Raumrichtungen an der mindestens einen ersten Fixierungsstelle und in der z-Richtung an der mindestens einen zweiten Fixierungsstelle sowie die gewünschte begrenzte Beweglichkeit in der x- und y-Richtung an der mindestens einen zweiten Fixierungsstelle erreicht werden.

Eine weitere bevorzugte Ausführungsform der erfindungsgemäßen Flusszelle zeichnet sich dadurch aus, dass das mindestens eine Material, aus dem der Grundkörper besteht, mindestens ein Polymer, besonders bevorzugt mindestens ein thermoplastisches Polymer, ist. Ganz besonders bevorzugt ist das Material, aus dem der Grundkörper besteht, mindestens ein Polymer, welches ausgewählt ist aus der Gruppe bestehend aus Polyetheretherketonen, Polytetrafluorethylen, Polypropylen, Polysulfonen, Polyethersulfonen, Polycarbonaten, Polyvinylchloriden, Polylactiden, Polyamiden, thermoplastischen Polyurethanen, Acrylnitril-Butadien-Styrol, UV-aushärtenden (autoklavierbaren) Kunstharzen, sowie Mischungen hiervon. In diesem Fall kann der Grundkörper auf einfache und günstige Weise mittels 3D-Druck hergestellt werden. Hierbei können auf leichte Weise eine Durchfluss- bzw. Kanalstruktur realisiert werden. Zum Beispiel kann das mindestens eine Material, aus dem der Grundkörper besteht, Bisphenol-A-dimethacrylat, 2-Hydroxyethylmethacrylat, und Urethandimethacrylat enthalten oder daraus bestehen. Beispielsweise kann als Material für den Grundkörper das Produkt "BioMed Clear" vom Hersteller formlabs verwendet werden.

Gemäß einer weiteren bevorzugten Ausführungsform der erfindungsgemäßen Flusszelle ist das mindestens eine Material, aus dem die Apertur besteht, ausgewählt aus der Gruppe bestehend aus Metallen, z.B. Eisen; Legierungen, bevorzugt Eisen-haltigen Legierungen, z.B. Edelstahl; Polymeren, z.B. Polyetheretherketonen; sowie Mischungen und Kombinationen hiervon, wobei die Apertur vorzugsweise Edelstahl enthält oder daraus besteht. Auf diese Weise kann eine sehr feste Verbindung der Durchflusszelle mit einem Modulhauptkörper eines optischen Moduls erreicht werden, sodass ein zur Abdichtung der Verbindung zwischen Flusszelle und Modulhauptkörper verwendetes Dichtelement gut abdichten kann.

Eine weitere bevorzugte Ausführungsform der erfindungsgemäßen Flusszelle, ist dadurch gekennzeichnet, dass der ATR-Kristall
- mindestens ein Material enthält oder aus diesem besteht, welches für Licht mit einer Wellenlänge im Bereich von 2 µm bis 20 µm, bevorzugt von 4 µm bis 12 µm, zumindest teilweise transparent ist, wobei der ATR-Kristalle bevorzugt mindestens ein Material enthält oder daraus besteht, welches ausgewählt ist aus der Gruppe bestehend aus Silicium, Diamant, Germanium, Zinkselenid, Zinksulfid, sowie Mischungen und Kombinationen hiervon, wobei der ATR-Kristalle besonders bevorzugt Silicium enthält oder daraus besteht, und/oder
- mehrere Mikroprismen umfasst, und/oder
- auf einer der Apertur zugewandten Seite eine Strukturierung, vorzugsweise Strukturierung mit Rillen oder Nuten, besonders bevorzugt eine Strukturierung mit V-förmigen Rillen oder V-förmigen Nuten, aufweist.

Die Transparenz des mindestens einen Materials, das der ATR-Kristall enthält oder aus dem er besteht, kann beispielsweise bestimmt werden mittels gemäß DIN 4522-4:1993-04.

Vorzugweise weist das mindestens eine zumindest teilweise Material, das der ATR-Kristall enthält oder aus dem er besteht, einen Transmissionsgrad für Licht mit einer Wellenlänge im Bereich von 2 µm bis 20 µm, bevorzugt von 4 µm bis 12 µm, von mehr als 10 % auf. Der Transmissionsgrad kann dabei beispielsweise bestimmt werden gemäß DIN 4522-4:1993-04.

Durch die Mikroprismen kann ein hoher Lichtdurchsatz bei gleichzeitig geringer Positioniergenauigkeit ermöglicht werden. Durch die Strukturierung mit Rillen oder Nuten wird erreicht, dass das Licht einfach eingekoppelt werden kann und die Positioniergenauigkeit verringert wird.

Eine weitere bevorzugte Ausführungsform der erfindungsgemäßen Flusszelle zeichnet sich dadurch aus, dass
- das mindestens eine erste Dichtungselement
   - mindestens ein Polymer enthält oder daraus besteht, welches ausgewählt ist aus der Gruppe bestehend aus Ethylen-Propylen-Dien-Kautschuken, Silikonen, sowie Mischungen hiervon, und/oder
   - in Form eines kreisförmigen Rings ausgebildet ist, und/oder
   - dichtend mit dem ATR-Kristall und/oder dem mindestens einen ersten Wandungsbereich der Aussparung in Kontakt steht
      und/oder
- die Flusszelle mindestens ein zweites Dichtungselement umfasst, welches um die Aussparung herum angeordnet ist, wobei das mindestens eine zweite Dichtungselement vorzugsweise
   - mindestens ein Polymer enthält oder daraus besteht, welches ausgewählt ist aus der Gruppe bestehend aus Ethylen-Propylen-Dien-Kautschuken, Silikonen, sowie Mischungen hiervon, und/oder
   - in Form eines kreisförmigen Rings ausgebildet ist, und/oder
   - zumindest teilweise in einer um die Aussparung herum angeordneten an der ersten Außenseite des Grundkörpers vorgesehenen weiteren Aussparung angeordnet ist, und/oder
   - dichtend mit dem Grundkörper und/oder der Apertur in Kontakt steht.

Dadurch, dass das mindestens eine erste Dichtungselment mindestens ein Polymer enthält oder daraus besteht, welches ausgewählt ist aus der Gruppe bestehend aus Ethylen-Propylen-Dien-Kautschuken, Silikonen, sowie Mischungen hiervon, und/oder in Form eines kreisförmigen Rings ausgebildet ist, und/oder dichtend mit dem ATR-Kristall und/oder dem mindestens einen ersten Wandungsbereich der Aussparung in Kontakt steht, kann auf einfache Weise eine gute Abdichtung der Flusszellenmesskammer durch das mindestens eine erste Dichtungselement erreicht werden. Hierbei ist anzumerken, dass es prinzipiell auch möglich ist, dass das mindestens eine erste Dichtungselement nicht mit dem ATR-Kristall und/oder dem mindestens einen ersten Wandungsbereich der Aussparung in Kontakt steht, nämlich z.B. dann, wenn ein weiteres Element zwischen dem mindestens einen ersten Dichtungselement und dem ATR-Kristall oder zwischen dem mindestens einen ersten Dichtungselement und dem mindestens einen ersten Wandungsbereich der Aussparung angeordnet ist.

Durch das mindestens eine zweite Dichtungselement kann erreicht werden, dass keine Gase aus der Umgebung in Bereiche (z.B. einen Hohlraum) zwischen dem ATR-Kristall und der Apertur gelangen können.

Eine weitere bevorzugte Ausführungsform der erfindungsgemäßen Flusszelle, ist dadurch gekennzeichnet, dass die Flusszelle mindestens ein Filterelement umfasst, welches in der Aussparung zwischen dem ATR-Kristall und mindestens einer mit dem mindestens einen Zulauf verbundenen Öffnung (und/oder zwischen dem ATR-Kristall und mindestens einer mit dem mindestens einen Ablauf verbundenen Öffnung) angeordnet ist, wobei vorzugsweise
- das mindestens eine Filterelement ausgewählt ist aus der Gruppe bestehend aus Cellulose-Filterelementen, Papier-Filterelementen, Glasfaserfilterelementen, sowie Kombinationen hiervon, und/oder
- eine Dicke im Bereich von 0,001 mm bis 5 mm, bevorzugt von 0,01 mm bis 1 mm, besonders bevorzugt von 0,02 mm bis 0,2 mm, aufweist.

In den zu messenden Substanzen, die durch die Durchflusszelle geleitet werden, können sich größere Moleküle (z.B. Proteine), Zellreste und Mikroorganismen befinden. Diese können sich auf dem ATR-Kristall ablagern, was dort zu Biofouling führen kann. Die Ablagerung bzw. das Biofouling führen in der Folge zu einer Verschlechterung der Messung, da die abgelagerten Komponenten zu einem überproportional großen Signal in der Messung bzw. dem gemessenen Spektrum führen und daher die Qualität der Messung beeinflussen. Zudem können auf dem ATR-Kristall befindliche Ablagerungen in einer folgenden Messung die dortige zu messende Substanz verunreinigen. Durch das Filterelement können nun in den zu messenden Substanzen enthaltene größere Moleküle (z.B. Proteine), Zellreste und Mikroorganismen vom ATR-Kristall ferngehalten werden, da diese Komponenten durch das Filterelement zurückgehalten werden, während die Flüssigkeit mit den für die optische Messung relevanten kleineren Molekülen durch das Filterelement gelangt. Demzufolge können durch das Filterelement Verunreinigungen der Flusszellenkammer und auch der (zukünftig) darin zu messenden Substanzen besser vermieden werden. Zudem können durch das Filterelement auch in den zu messenden Substanzen vorhandene Gasbläschen, die bei einer Anlagerung an den ATR-Kristall ebenfalls zu einer ungewünschten Beeinflussung der Messung bzw. des gemessenen Spektrums führen, vom ATR-Kristall ferngehalten werden.

Eine weitere bevorzugte Ausführungsform der erfindungsgemäßen Flusszelle zeichnet sich dadurch aus, dass die Flusszelle zusätzlich mindestens einen Filterhalter zum Halten des mindestens einen Filterelements umfasst, der zwischen dem ATR-Kristall und dem mindestens einen Filterelement angeordnet ist, wobei der mindestens eine Filterhalter vorzugsweise eine Gitterstruktur und einen um die Gitterstruktur verlaufenden Rahmen aufweist. Besonders bevorzugt ist hierbei, dass
- der Rahmen mit dem ATR-Kristall in Kontakt steht und die Gitterstruktur nicht mit dem ATR-Kristall in Kontakt steht, wobei die Gitterstruktur vorzugsweise in einem Abstand von 0,001 mm bis 5 mm, bevorzugt von 0,005 mm bis 2 mm, besonders bevorzugt von 0,008 mm bis 1 mm, ganz besonders bevorzugt von 0,01 mm bis 0,1 mm, zum ATR-Kristall angeordnet ist, und/oder
- das mindestens eine Filterelement zwischen dem Rahmen und mindestens einem der Apertur zugewandten zweiten Wandungsbereich der Aussparung eingeklemmt ist, und/oder
- ein der Apertur zugewandter zentraler Wandungsbereich der Aussparung mindestens ein Haltelement, vorzugsweise mindestens zwei Halteelemente, aufweist, wobei das mindestens eine Filterelement zwischen der Gitterstruktur und dem mindestens einen Haltelement eingeklemmt ist.

Durch die Filterhalter kann das Filterelement in einem vorteilhaften Abstand zum ATR-Kristall platziert werden, sodass der Filter nicht in Kontakt mit dem ATR-Kristall kommt und dadurch die optische Messung stört. Die Gitterstruktur kann hierbei auf einfache Weise verhindern, dass ein zentraler Bereich des Filters, welcher durch die zu messende Substanz durchnässt ist, durchhängt und dabei in Kontakt mit dem ATR-Kristall kommt. Durch das mindestens eine Haltelement am zentralen Wandungsbereich der Aussparung kann der Filter ebenfalls besser fixiert werden, wodurch ein Verrutschen des Filters besser verhindert werden kann.

Eine weitere bevorzugte Ausführungsform der erfindungsgemäßen Flusszelle zeichnet sich dadurch aus, dass das mindestens eine Filterelement in direktem Kontakt zu mindestens einer auf dem ATR-Kristall aufgebrachten Fotolackbeschichtung angeordnet ist, wobei vorzugweise
- die mindestens eine Fotolackbeschichtung eine Dicke im Bereich von 0,1 µm bis 100 µm, bevorzugt von 1 µm bis 50 µm, besonders bevorzugt von 5 µm bis 20 µm, aufweist, und/oder
- die mindestens eine Fotolackbeschichtung in Form eines Gitters oder streifeförmig auf dem ATR-Kristall aufgebracht ist, wobei die Anordnung der Fotolackbeschichtung auf dem ATR-Kristall bevorzugt an eine Strukturierung des ATR-Kristalls, die der ATR-Kristall auf einer der Apertur zugewandten Seite aufweist, angepasst ist, und/oder
- das mindestens eine Filterelement am mindestens einen ersten Dichtungselement befestigt ist, bevorzugt mit dem mindestens einen ersten Dichtungselement stoffschlüssig verbunden ist.

Für die Fotolackbeschichtung kann ein im Stand der Technik üblicher Fotolack verwendet werden. Mit dem Fotolack kann sehr präzise und dünn beschichtet werden. Somit kann durch die Fotolackbeschichtung das Filterelement in einem vorteilhaften sehr kleinen Abstand zum ATR-Kristall platziert werden, sodass einerseits der Filter nicht in Kontakt mit dem ATR-Kristall kommt und dadurch die optische Messung stört und andererseits nur noch sehr geringe Flüssigkeitsmengen zwischen ATR-Kristall und Filterelement vorhanden sind, wodurch sehr geringe die Diffusionszeit erhalten wird, sodass die Messgeschwindigkeit stark erhöht werden kann. Dadurch, dass die mindestens eine Fotolackbeschichtung in Form eines Gitters oder streifenförmig auf dem ATR-Kristall aufgebracht ist, kann hierbei eine Störung der optischen Messung durch die Fotolackbeschichtung verhindert oder zumindest minimiert werden. Besonders bevorzugt kann hierbei die Anordnung der Fotolackbeschichtung auf dem ATR-Kristall an eine Strukturierung des ATR-Kristalls, die der ATR-Kristall auf einer der Apertur zugewandten Seite aufweist, angepasst sein, sodass die Fotolackbeschichtung nur an solchen Stellen aufgebracht ist, die von den optischen Strahlen (z.B. Infrarotstrahlen) während einer optischen Messung nicht erreicht werden. Weist der ATR-Kristall beispielsweise auf einer der Apertur zugewandten Seite eine Strukturierung mit Rillen oder Nuten auf, kann die Fotolackbeschichtung z.B. nur an solchen streifenförmigen Stellen aufgebracht sein, die (auf der gegenüberliegenden Seite des ATR-Kristalls) entlang dieser Rillen bzw. Nuten verlaufen.

Weiterhin ist es prinzipiell auch möglich, dass das mindestens eine Filterelement in direktem Kontakt zum mindestens einen ATR-Kristall angeordnet ist, d.h. ohne Abstand zwischen Filterelement und ATR-Kristall. Hierbei muss weder ein Filterhalter noch eine Fotolackbeschichtung verwendet werden.

Eine weitere bevorzugte Ausführungsform der erfindungsgemäßen Flusszelle zeichnet sich dadurch aus, dass die Aussparung
- zwischen der mindestens einen ersten Fixierungsstelle und der mindestens einen zweiten Fixierungsstelle angeordnet ist, wobei die mindestens eine erste Fixierungsstelle und die mindestens eine zweite Fixierungsstelle vorzugsweise den gleichen Abstand zur Aussparung aufweisen, und/oder
- an einem der Apertur zugewandten zentralen Wandungsbereich der Aussparung eine Strukturierung, vorzugsweise eine gezackte Strukturierung, aufweist, und/oder
- an einem der Apertur zugewandten zentralen Wandungsbereich der Aussparung mindestens eine mit dem mindestens einen Zulauf verbundene Öffnung aufweist, und/oder
- an einem der Apertur zugewandten zentralen Wandungsbereich der Aussparung mindestens eine mit dem mindestens einen Ablauf verbundene Öffnung aufweist.

Durch die (gezackte) Strukturierung kann ein auf dem Filterelement stattfindendes Biofouling besser vermieden werden.

Dadurch, dass die Aussparung zwischen der mindestens einen ersten Fixierungsstelle und der mindestens einen zweiten Fixierungsstelle angeordnet ist bzw. die Fixierungsstellen (mit den Fixierungselementen) so angeordnet sind, dass die Aussparung (und damit auch die Flusszellenmesskammer) zwischen beiden Fixierungsstellen, insbesondere genau in der Mitte zwischen beiden Fixierungsstellen, liegt, kann eine besonders gute Fixierung mit einer besonders hohen Dichtigkeit der Flusszellenmesskammer erreicht werden. Vorzugsweise beträgt der Abstand zwischen der mindestens einen ersten Fixierungsstelle und der mindestens einen zweiten Fixierungsstelle 5 mm bis 100 mm, bevorzugt 15 mm bis 50 mm, besonders bevorzugt 20 mm bis 40 mm. Vorzugsweise beträgt der Abstand zwischen der mindestens einen ersten Fixierungsstelle und der Aussparung und/oder der Abstand zwischen der mindestens einen zweiten Fixierungsstelle und der Aussparung 2 mm bis 50 mm, bevorzugt 7 mm bis 25 mm, besonders bevorzugt 10 mm bis 20 mm.

Eine weitere bevorzugte Ausführungsform der erfindungsgemäßen Flusszelle, ist dadurch gekennzeichnet, dass die Flusszelle mindestens ein drittes Fixierungsmittel, vorzugsweise ein einzelnes drittes Fixierungsmittel, zum Befestigen der Flusszelle an einem Modulhauptkörper eines optischen Moduls umfasst, wobei
- das mindestens eine dritte Fixierungsmittel eine Haupterstreckungsrichtung aufweist, wobei ein Winkel zwischen dieser Haupterstreckungsrichtung und der ersten Außenseite des Grundkörpers in einem Bereich von 20° bis 85°, bevorzugt von 30° bis 70°, besonders bevorzugt von 40° bis 65°, liegt, und/oder
- das mindestens eine dritte Fixierungsmittel ausgewählt ist aus der Gruppe bestehend aus Zylinderkopfschrauben, Linsenkopfschrauben, sowie Kombinationen hiervon, wobei das mindestens eine dritte Fixierungsmittel vorzugsweise mindestens eine Zylinderkopfschraube, besonders bevorzugt eine einzelne Zylinderkopfschraube, ist, und/oder
- die Apertur einen herausragenden Bereich aufweist, der über eine (an die erste Außenseite des Grundkörpers angrenzende) zweite Außenseite des Grundkörpers herausragt, wobei die Aussparung vorzugweise zwischen der zweiten Außenseite des Grundkörpers und dem mindestens einen dritten Fixierungsmittel angeordnet ist, und/oder
- die Flusszelle zusätzlich mindestens ein drittes Dichtungselement aufweist, das um das mindestens eine dritte Fixierungsmittel herum angeordnet ist und dichtend mit dem mindestens einen dritten Fixierungsmittel verbunden ist.

Durch das dritte Fixierungsmittel kann Flusszelle auf einfache Weise fest mit dem Modulhauptkörper eines optischen Moduls verbunden werden.

Es ist bevorzugt, dass das mindestens eine dritte Dichtungselement
- mindestens ein Polymer enthält oder daraus besteht, welches ausgewählt ist aus der Gruppe bestehend aus Ethylen-Propylen-Dien-Kautschuken, Silikonen, sowie Mischungen hiervon, und/oder
- in Form eines kreisförmigen Rings ausgebildet ist

Die vorliegende Erfindung betrifft ferner ein optisches Modul umfassend einen Modulhauptkörper sowie eine erfindungsgemäße Flusszelle, die am Modulhauptkörper befestigt ist.

Eine bevorzugte Ausführungsform des erfindungsgemäßen optischen Moduls ist dadurch gekennzeichnet, dass die Flusszelle über mindestens ein drittes Fixierungsmittel, bevorzugt ein einzelnes drittes Fixierungsmittel, sowie ein an einer der Flusszelle zugewandten Außenseite des Modulhauptkörpers angeordnetes Anschlagelement am Modulhauptkörper befestigt ist, wobei das Anschlagelement eine Anschlagfläche aufweist, gegen die die Flusszelle durch das mindestens eine dritte Fixierungsmittel gedrückt wird, und wobei vorzugsweise
- ein Winkel zwischen der Anschlagfläche und der ersten Außenseite des Grundkörpers in einem Bereich von 20° bis 85°, bevorzugt von 30° bis 65°, besonders bevorzugt von 40° bis 50°, liegt, und/oder
- das mindestens eine dritte Fixierungsmittel eine Haupterstreckungsrichtung aufweist, wobei ein Winkel zwischen dieser Haupterstreckungsrichtung und der ersten Außenseite des Grundkörpers in einem Bereich von 20° bis 85°, bevorzugt von 30° bis 70°, besonders bevorzugt von 40° bis 65°, liegt, und/oder
- das mindestens eine dritte Fixierungsmittel ausgewählt ist aus der Gruppe bestehend aus Zylinderkopfschrauben, Linsenkopfschrauben, sowie Kombinationen hiervon, wobei das mindestens eine dritte Fixierungsmittel vorzugsweise mindestens eine Zylinderkopfschraube, besonders bevorzugt eine einzelne Zylinderkopfschraube, ist, und/oder
- die Apertur einen herausragenden Bereich aufweist, der über eine (an die erste Außenseite des Grundkörpers angrenzende) zweite Außenseite des Grundkörpers herausragt, wobei der herausragende Bereich gegen die Anschlagfläche gedrückt wird, und wobei die Aussparung vorzugweise zwischen der zweiten Außenseite des Grundkörpers und dem mindestens einen dritten Fixierungsmittel angeordnet ist, und/oder
- die Flusszelle zusätzlich mindestens ein drittes Dichtungselement aufweist, das um das mindestens eine dritte Fixierungsmittel herum angeordnet ist und dichtend mit dem mindestens einen dritten Fixierungsmittel verbunden ist.

Durch das dritte Fixierungsmittel und das Anschlagelement kann die Flusszelle auf einfache Weise fest mit dem Modulhauptkörper verbunden werden. Hierbei kann das dritte Fixierungsmittel in einem bestimmten Winkel zur ersten Außenseite des Grundkörpers angebracht sein, sodass die Flusszelle in einem bestimmten Winkel gegen den Modulhauptkörper sowie gegen die Anschlagfläche des Anschlagelements gedrückt wird, d.h. eine erste Kraftkomponente geht in Richtung des Modulhauptkörpers und eine zweite Kraftkomponente geht in Richtung der Anschlagfläche. Die Anschlagfläche kann nun in einem entsprechenden Winkel zur ersten Außenseite des Grundkörpers angeordnet sein, um so die vom Fixierungsmittel auf die Anschlagfläche ausgeübte Kraftkomponente gut aufnehmen und auf den Modulhauptkörper umlenken zu können. Auf diese Weise kann eine sehr feste Fixierung erreicht werden.

Eine bevorzugte Ausführungsform des erfindungsgemäßen optischen Moduls zeichnet sich dadurch aus, dass der Modulhauptkörper
- eine (einzelne) Linse zum Einkoppeln eines auf den ATR-Kristall einfallenden Lichtstrahls sowie zum Auskoppeln eines vom ATR-Kristall reflektierten Lichtstrahls umfasst, wobei die Linse vorzugsweise Zinkselenid enthält oder daraus besteht, und/oder
- ein optisches Fenster umfasst, welches zwischen dem ATR-Kristall und der Linse angeordnet ist, wobei das optische Fenster vorzugsweise Zinksulfid enthält oder daraus besteht, und/oder
- mindestens ein an einer der Flusszelle zugewandten Außenseite des Modulhauptkörpers angeordnetes viertes Dichtungselement umfasst, das mit einer dem Modulhauptkörper zugewandten Seite des Flusszelle dichtend in Kontakt steht, wobei das mindestens eine vierte Dichtungselement in Form eines kreisförmigen Rings ausgebildet ist, und/oder
- einen Polarisator zur Polarisierung eines vom ATR-Kristall reflektierten und danach ausgekoppelten Lichtstrahls umfasst.

Die Verwendung einer einzelnen Linse für die Ein-und Auskopplung des Lichtes hat den Vorteil, dass sie quasi keine Justage braucht, da dieser Aufbau in einem gewissen Rahmen selbst korrigierend wirkt (Katzenauge). Das ist von Vorteil, um Ungenauigkeiten des ATR Kristalls und der Flusszelle auszugleichen. Das mindestens eine an einer der Flusszelle zugewandten Außenseite des Modulhauptkörpers angeordnete vierte Dichtungselement stellt sicher, dass keine Gase oder Flüssigkeiten in den Lichtweg eindringen. Dies verbessert die Langzeitstabilität, da vor allem Wasserdampf IR aktiv ist. Es ist bevorzugt, dass das mindestens eine vierte Dichtungselement mindestens ein Polymer enthält oder daraus besteht, welches ausgewählt ist aus der Gruppe bestehend aus Ethylen-Propylen-Dien-Kautschuken, Silikonen, sowie Mischungen hiervon.

Im Weiteren betrifft die vorliegende Erfindung auch ein Spektrometer umfassend mindestens eine Lichtquelle, mindestens einen Lichtdetektor sowie ein erfindungsgemäßes optisches Modul. Vorzugsweise ist das Spektrometer ein FTIR-Spektrometer und/oder ein QCL-basiertes Infrarotspektrometer ist.
- Fig. 1a-c: zeigen eine erste beispielhafte Ausführungsform einer erfindungsgemäßen Flusszelle in mehreren Ansichten
- Fig. 1d: zeigt einen vergrößerter Ausschnitt aus Fig. 1a
- Fig. 2a-c: zeigen eine zweite beispielhafte Ausführungsform einer erfindungsgemäßen Flusszelle in mehreren Ansichten
- Fig. 2d: zeigt einen vergrößerter Ausschnitt aus Fig. 2a
- Fig. 3a-c: zeigen eine dritte beispielhafte Ausführungsform einer erfindungsgemäßen Flusszelle in mehreren Ansichten
- Fig. 3d: zeigt einen vergrößerter Ausschnitt aus Fig. 3a
- Fig. 4: zeigt eine Schnittansicht einer beispielhaften Ausführungsform eines erfindungsgemäßen Spektrometers
- Fig. 5: zeigtz eine Schnittansicht einer beispielhaften Ausführungsform eines erfindungsgemäßen Spektrometers

### Ausführungsbeispiel 1

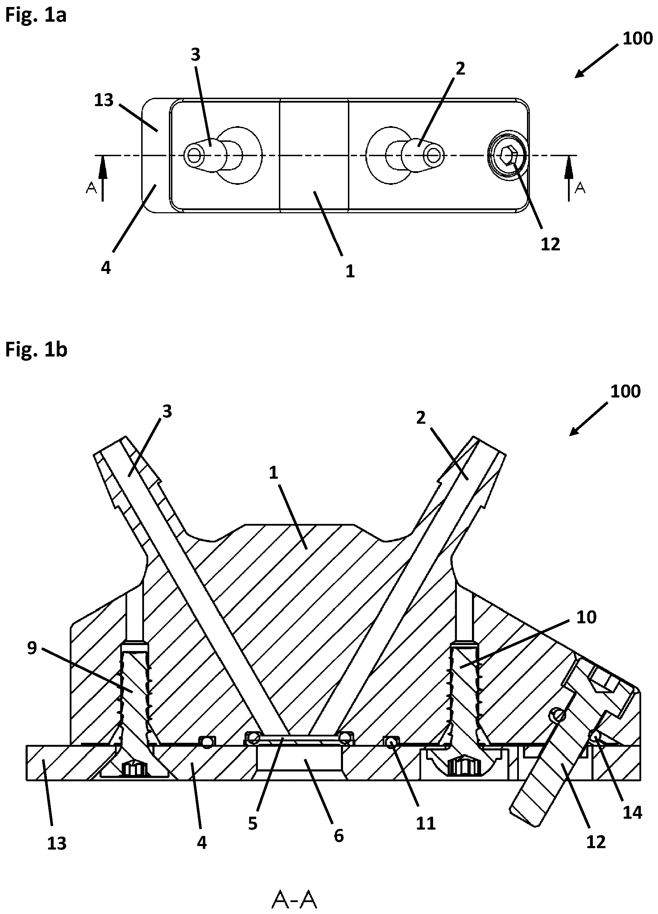

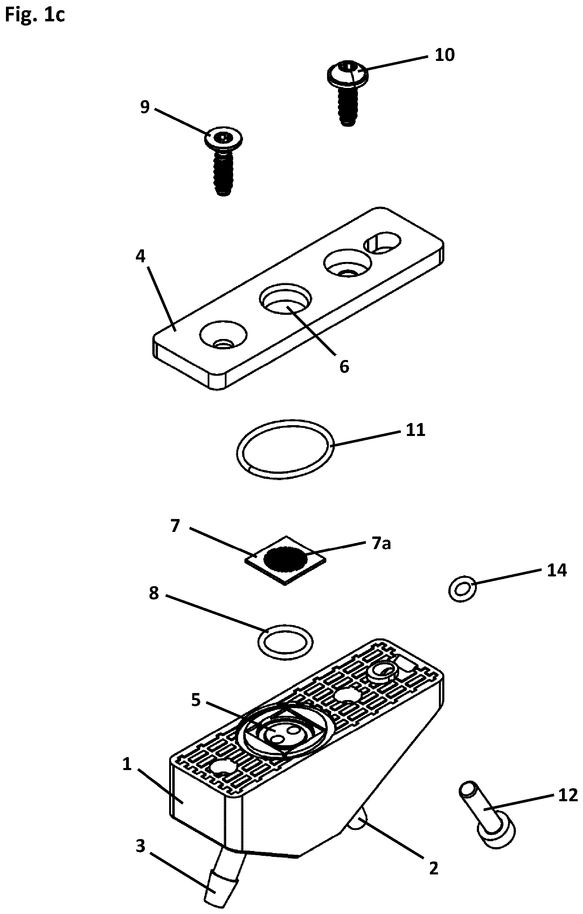

In den Fig. 1a bis 1c ist eine erste beispielhafte Ausführungsform einer erfindungsgemäßen Flusszelle in mehreren Ansichten dargestellt. Fig. 1a zeigt eine Draufsicht der Flusszelle 100. In Fig. 1b ist eine seitliche Schnittansicht der Flusszelle 100 gezeigt, wobei der Schnitt entlang der in Fig. 1a dargestellten Linie A-A erfolgt ist. Zudem zeigt Fig. 1c eine Explosionsansicht der Flusszelle.

Die Flusszelle 100 umfasst einen polymeren Grundkörper 1 (z.B. aus dem Produkt "BioMed Clear" vom Hersteller formlabs) mit einem Zulauf 2 für zu messende Substanzen und einem Ablauf 3 für gemessene Substanzen sowie eine an einer ersten Außenseite des Grundköpers 1 angeordnete Apertur 4, die aus einer Legierung, z.B. Edelstahl, besteht. Der Grundkörper 1 und die Apertur 4 bestehen somit aus unterschiedlichen Materialien, die voneinander verschiedene thermische Ausdehnungskoeffizienten aufweisen.

An der ersten Außenseite des Grundkörpers 1 ist eine Aussparung 5 vorgesehen, die eine mit dem Zulauf 2 und dem Ablauf 3 fluidisch verbundene Flusszellenmesskammer enthält. Die Apertur 4 ist an der ersten Außenseite des Grundköpers 1 angeordnet, an welcher auch die Aussparung 5 vorgesehen ist, die die Flusszellenmesskammer enthält. Somit grenzt die Aussparung 5 mit der Flusszellenmesskammer an die Apertur 4 an. In diesem Bereich der Apertur 4 ist auch die Aperturblende 6 ausgeführt, sodass die Aperturblende 6 an die Aussparung 5 angrenzt.

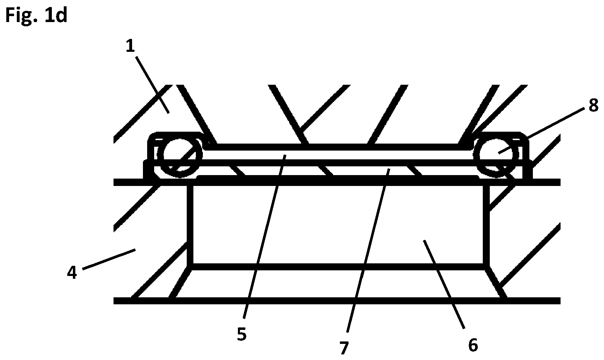

In Fig. 1d ein vergrößerter Ausschnitt aus Fig. 1a gezeigt, welcher eine vergrößerte seitliche Darstellung der Aussparung 5 sowie der darin angeordneten Elemente zeigt. Die Flusszelle 100 umfasst ferner eine Anordnung aus einem ATR-Kristall 7 und einem ersten Dichtungselement 8 zur Abdichtung der Flusszellenmesskammer, die zwischen der Apertur 4 und einem der Apertur 4 zugewandten ersten Wandungsbereich der Aussparung 5 eingeklemmt ist. Hierbei ist das erste Dichtungselement 8 auf einer von der Apertur 4 abgewandten Seite des ATR-Kristalls 7 angeordnet und steht dichtend mit dem ATR-Kristall 7 und dem ersten Wandungsbereich der Aussparung 5 in Kontakt. Ein der Apertur 4 zugewandter zentraler Wandungsbereich der Aussparung weist eine mit dem einen Zulauf 2 verbundene Öffnung sowie eine mit dem Ablauf 3 verbundene Öffnung auf.

Der ATR-Kristall 7, der z.B. aus Silicium besteht, umfasst mehrere Mikroprismen und weist auf einer der Apertur zugewandten Seite eine Strukturierung 7a mit V-förmigen Rillen bzw. Nuten, aufweist. Das erste Dichtungselement 8 besteht aus einem polymeren Material (z.B. Ethylen-Propylen-Dien-Kautschuk oder Silikon) und ist in Form eines kreisförmigen Rings (O-Ring) ausgebildet.

Die Flusszellenkammer ist nun so ausgebildet, dass sie durch den ATR-Kristall 7, das Dichtungselement 8 und Wandungsbereiche der Aussparung 5 begrenzt wird. Durch das Fixieren der Apertur 4 am Grundkörper 1 kann die den ATR-Kristall 7 und das Dichtungselement 8 umfassende Anordnung zwischen der Apertur 4 und dem ersten Wandungsbereich der Aussparung 5 eingeklemmt werden, wodurch eine Abdichtung der Flusszellenkammer erreicht werden kann.

Hierbei ist die Apertur 4 über ein erstes Fixierungsmittel 9 an einer ersten Fixierungsstelle am Grundkörper 1 fixierbar und über ein zweites Fixierungsmittel 10 an einer zweiten Fixierungsstelle fixierbar. Dabei ist die Aussparung 5 zwischen der ersten Fixierungsstelle (bzw. dem ersten Fixierungsmittel 9) und der zweiten Fixierungsstelle (bzw. dem zweiten Fixierungsmittel 10) angeordnet ist, wobei die erste Fixierungsstelle (bzw. das erste Fixierungsmittel 9) und die zweite Fixierungsstelle (bzw. das zweite Fixierungsmittel 10) den gleichen Abstand zur Aussparung 5 aufweisen. Beim ersten Fixierungsmittel 9 handelt es sich um eine Senkkopfschraube und beim zweiten Fixierungsmittel 10 um eine Linsenkopfschraube. Durch die Senkkopfschraube ist die Apertur 4 so an der ersten Fixierungsstelle am Grundkörper 1 fixierbar, dass der Grundkörper 1 und die Apertur 4 an der ersten Fixierungsstelle in einer parallel zur ersten Außenseite des Grundkörpers 1 verlaufenden x-Richtung, in einer parallel zur ersten Außenseite des Grundkörpers 1 verlaufenden y-Richtung und in einer senkrecht zur ersten Außenseite des Grundkörpers 1 verlaufenden z-Richtung im Wesentlichen nicht relativ zueinander bewegbar sind. Durch die Linsenkopfschraube ist die Apertur 4 so an der zweiten Fixierungsstell am Grundkörper 1 fixierbar, dass der Grundkörper 1 und die Apertur 4 an der zweiten Fixierungsstelle in der z-Richtung im Wesentlichen nicht relativ zueinander bewegbar sind und in der x-Richtung sowie in der y-Richtung jeweils nur in einem beschränkten Maße relativ zueinander bewegbar sind, sodass bei Temperaturänderungen erfolgende unterschiedliche Ausdehnungen und Kontraktionen der Komponenten der Flusszelle ausgeglichen werden können.

In der Folge kommt es bei starker Temperaturänderung (z.B. beim Sterilisieren bzw. Autoklavieren der Flusszelle) zwar zu einer unterschiedlichen Ausdehnung des Grundkörpers 1 und der Apertur 4 (aufgrund der verschiedenen thermischen Ausdehnungskoeffizienten, doch führt diese (aufgrund der gewissen Beweglichkeit in der x- und der y-Richtung) nicht zu einer Verbiegung der Komponenten, sodass es zu keiner Lockerung der eingeklemmten den ATR-Kristall 7 und das erste Dichtungselement 8 umfassenden Anordnung kommt. Auf diese Weise kann somit das Entstehen undichter Stellen in der Anordnung, an denen die Flusszellenmesskammer nicht mehr ausreichend abgedichtet ist, verhindert werden. Daher weist die Durchflusszelle - auch bei starker Temperaturänderung (z.B. beim Sterilisieren bzw. Autoklavieren der Flusszelle) - eine hohe Dichtigkeit auf, sodass Verunreinigungen nicht mehr durch undichte Stellen von außen in die Flusszellenkammer gelangen können. Demzufolge können Verunreinigungen der Flusszellenkammer sowie der darin gemessenen Substanzen durch von außen eindringende Verunreinigungen bzw. Mikroorganismen besser vermieden werden.

Die Flusszelle 100 umfasst zusätzlich ein zweites Dichtungselement 11, welches um die Aussparung 5 herum angeordnet ist, wobei das zweite Dichtungselement aus einem polymeren Material (z.B. Ethylen-Propylen-Dien-Kautschuk oder Silikon) besteht und in Form eines kreisförmigen Rings (O-Ring) ausgebildet ist.

Im Weiteren umfasst die Flusszelle 100 ein einzelnes drittes Fixierungsmittel 12 zum Befestigen der Flusszelle an einem Modulhauptkörper eines optischen Moduls. Beim dritten Fixierungsmittel 12 handelt es sich um eine Zylinderkopfschraube. Diese ist so angeordnet, dass der Winkel zwischen der Haupterstreckungsrichtung der Zylinderkopfschraube (bzw. des dritten Fixierungsmittels 12) und der ersten Außenseite des Grundkörpers 1 in einem Bereich von 40° bis 65° liegt. Ferner weist die Apertur 4 einen herausragenden Bereich 13 auf, der über eine an die erste Außenseite des Grundkörpers 1 angrenzende zweite Außenseite des Grundkörpers 1 herausragt. Hierbei ist die Aussparung 5 zwischen der zweiten Außenseite des Grundkörpers 1 und dem dritten Fixierungsmittel 12 angeordnet. Die Apertur weist außerdem zusätzlich ein drittes Dichtungselement 14 auf, das um das mindestens eine dritte Fixierungsmittel herum angeordnet ist und dichtend mit dem dritten Fixierungsmittel 12 verbunden ist.

### Ausführungsbeispiel 2

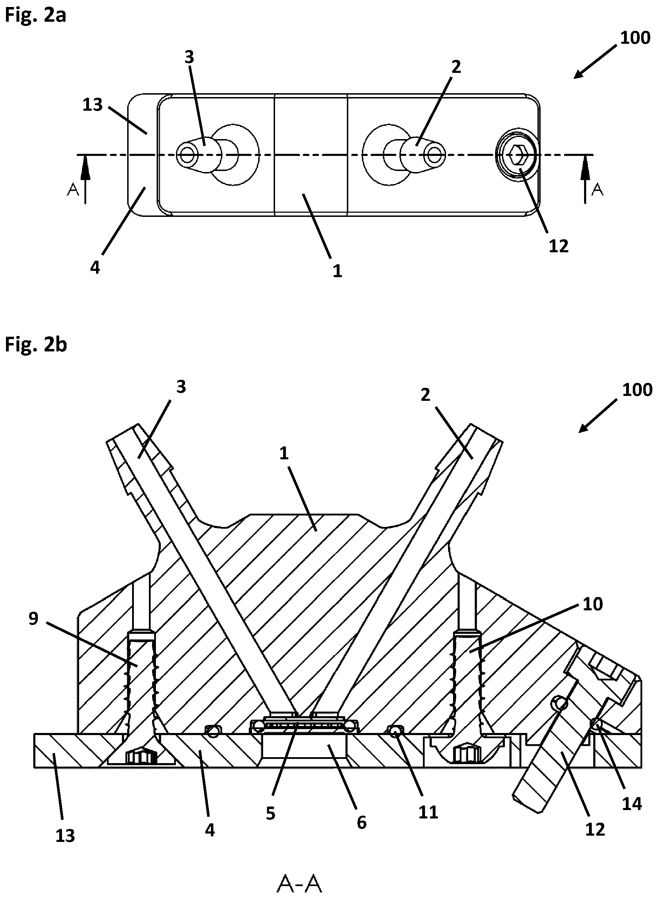

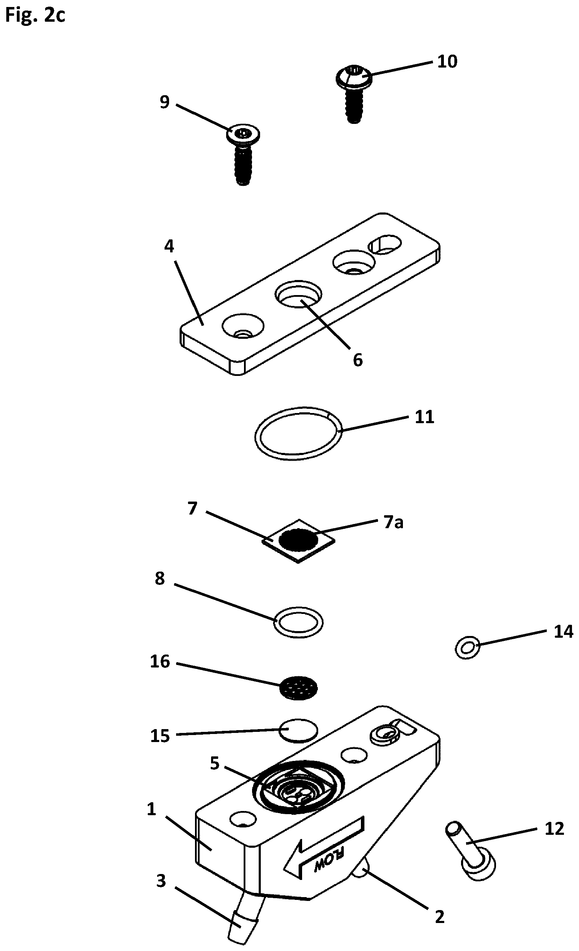

In den Fig. 2a bis 2c ist eine zweite beispielhafte Ausführungsform einer erfindungsgemäßen Flusszelle in mehreren Ansichten dargestellt. Fig. 2a zeigt eine Draufsicht der Flusszelle 100. In Fig. 2b ist eine seitliche Schnittansicht der Flusszelle 100 gezeigt, wobei der Schnitt entlang der in Fig. 2a dargestellten Linie A-A erfolgt ist. Zudem zeigt Fig. 2c eine Explosionsansicht der Flusszelle.

Die Flusszelle 100 umfasst einen polymeren Grundkörper 1 (z.B. aus dem Produkt "BioMed Clear" vom Hersteller formlabs) mit einem Zulauf 2 für zu messende Substanzen und einem Ablauf 3 für gemessene Substanzen sowie eine an einer ersten Außenseite des Grundköpers 1 angeordnete Apertur 4, die aus einer Legierung, z.B. Edelstahl, besteht. Der Grundkörper 1 und die Apertur 4 bestehen somit aus unterschiedlichen Materialien, die voneinander verschiedene thermische Ausdehnungskoeffizienten aufweisen.

An der ersten Außenseite des Grundkörpers 1 ist eine Aussparung 5 vorgesehen, die eine mit dem Zulauf 2 und dem Ablauf 3 fluidisch verbundene Flusszellenmesskammer enthält. Die Apertur 4 ist an der ersten Außenseite des Grundköpers 1 angeordnet, an welcher auch die Aussparung 5 vorgesehen ist, die die Flusszellenmesskammer enthält. Somit grenzt die Aussparung 5 mit der Flusszellenmesskammer an die Apertur 4 an. In diesem Bereich der Apertur 4 ist auch die Aperturblende 6 ausgeführt, sodass die Aperturblende 6 an die Aussparung 5 angrenzt.

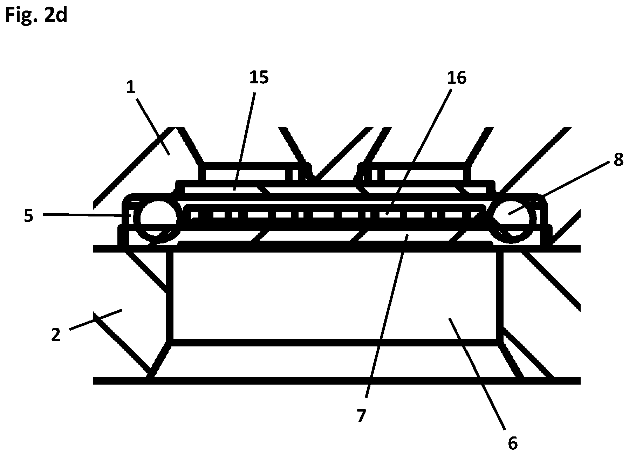

In Fig. 2d ein vergrößerter Ausschnitt aus Fig. 2a gezeigt, welcher eine vergrößerte seitliche Darstellung der Aussparung 5 sowie der darin angeordneten Elemente zeigt. Die Flusszelle 100 umfasst ferner eine Anordnung aus einem ATR-Kristall 7 und einem ersten Dichtungselement 8 zur Abdichtung der Flusszellenmesskammer, die zwischen der Apertur 4 und einem der Apertur 4 zugewandten ersten Wandungsbereich der Aussparung 5 eingeklemmt ist. Hierbei ist das erste Dichtungselement 8 auf einer von der Apertur 4 abgewandten Seite des ATR-Kristalls 7 angeordnet und steht dichtend mit dem ATR-Kristall 7 und dem ersten Wandungsbereich der Aussparung 5 in Kontakt. Ein der Apertur 4 zugewandter zentraler Wandungsbereich der Aussparung weist eine mit dem einen Zulauf 2 verbundene Öffnung sowie eine mit dem Ablauf 3 verbundene Öffnung auf.

Der ATR-Kristall 7, der z.B. aus Silicium besteht, umfasst mehrere Mikroprismen und weist auf einer der Apertur zugewandten Seite eine Strukturierung 7a mit V-förmigen Rillen bzw. Nuten, aufweist. Das erste Dichtungselement 8 besteht aus einem polymeren Material (z.B. Ethylen-Propylen-Dien-Kautschuk oder Silikon) und ist in Form eines kreisförmigen Rings (O-Ring) ausgebildet.

Die Flusszellenkammer ist nun so ausgebildet, dass sie durch den ATR-Kristall 7, das Dichtungselement 8 und Wandungsbereiche der Aussparung 5 begrenzt wird. Durch das Fixieren der Apertur 4 am Grundkörper 1 kann die den ATR-Kristall 7 und das Dichtungselement 8 umfassende Anordnung zwischen der Apertur 4 und dem ersten Wandungsbereich der Aussparung 5 eingeklemmt werden, wodurch eine Abdichtung der Flusszellenkammer erreicht werden kann.

Hierbei ist die Apertur 4 über ein erstes Fixierungsmittel 9 an einer ersten Fixierungsstelle am Grundkörper 1 fixierbar und über ein zweites Fixierungsmittel 10 an einer zweiten Fixierungsstelle fixierbar. Dabei ist die Aussparung 5 zwischen der ersten Fixierungsstelle (bzw. dem ersten Fixierungsmittel 9) und der zweiten Fixierungsstelle (bzw. dem zweiten Fixierungsmittel 10) angeordnet ist, wobei die erste Fixierungsstelle (bzw. das erste Fixierungsmittel 9) und die zweite Fixierungsstelle (bzw. das zweite Fixierungsmittel 10) den gleichen Abstand zur Aussparung 5 aufweisen. Beim ersten Fixierungsmittel 9 handelt es sich um eine Senkkopfschraube und beim zweiten Fixierungsmittel 10 um eine Linsenkopfschraube. Durch die Senkkopfschraube ist die Apertur 4 so an der ersten Fixierungsstelle am Grundkörper 1 fixierbar, dass der Grundkörper 1 und die Apertur 4 an der ersten Fixierungsstelle in einer parallel zur ersten Außenseite des Grundkörpers 1 verlaufenden x-Richtung, in einer parallel zur ersten Außenseite des Grundkörpers 1 verlaufenden y-Richtung und in einer senkrecht zur ersten Außenseite des Grundkörpers 1 verlaufenden z-Richtung im Wesentlichen nicht relativ zueinander bewegbar sind. Durch die Linsenkopfschraube ist die Apertur 4 so an der zweiten Fixierungsstell am Grundkörper 1 fixierbar, dass der Grundkörper 1 und die Apertur 4 an der zweiten Fixierungsstelle in der z-Richtung im Wesentlichen nicht relativ zueinander bewegbar sind und in der x-Richtung sowie in der y-Richtung jeweils nur in einem beschränkten Maße relativ zueinander bewegbar sind, sodass bei Temperaturänderungen erfolgende unterschiedliche Ausdehnungen und Kontraktionen der Komponenten der Flusszelle ausgeglichen werden können.

In der Folge kommt es bei starker Temperaturänderung (z.B. beim Sterilisieren bzw. Autoklavieren der Flusszelle) zwar zu einer unterschiedlichen Ausdehnung des Grundkörpers 1 und der Apertur 4 (aufgrund der verschiedenen thermischen Ausdehnungskoeffizienten, doch führt diese (aufgrund der gewissen Beweglichkeit in der x- und der y-Richtung) nicht zu einer Verbiegung der Komponenten, sodass es zu keiner Lockerung der eingeklemmten den ATR-Kristall 7 und das erste Dichtungselement 8 umfassenden Anordnung kommt. Auf diese Weise kann somit das Entstehen undichter Stellen in der Anordnung, an denen die Flusszellenmesskammer nicht mehr ausreichend abgedichtet ist, verhindert werden. Daher weist die Durchflusszelle - auch bei starker Temperaturänderung (z.B. beim Sterilisieren bzw. Autoklavieren der Flusszelle) - eine hohe Dichtigkeit auf, sodass Verunreinigungen nicht mehr durch undichte Stellen von außen in die Flusszellenkammer gelangen können. Demzufolge können Verunreinigungen der Flusszellenkammer sowie der darin gemessenen Substanzen durch von außen eindringende Verunreinigungen bzw. Mikroorganismen besser vermieden werden.

Die Flusszelle 100 umfasst zusätzlich ein zweites Dichtungselement 11, welches um die Aussparung 5 herum angeordnet ist, wobei das zweite Dichtungselement aus einem polymeren Material (z.B. Ethylen-Propylen-Dien-Kautschuk oder Silikon) besteht und in Form eines kreisförmigen Rings (O-Ring) ausgebildet ist.

Im Weiteren umfasst die Flusszelle 100 ein einzelnes drittes Fixierungsmittel 12 zum Befestigen der Flusszelle an einem Modulhauptkörper eines optischen Moduls. Beim dritten Fixierungsmittel 12 handelt es sich um eine Zylinderkopfschraube. Diese ist so angeordnet, dass der Winkel zwischen der Haupterstreckungsrichtung der Zylinderkopfschraube (bzw. des dritten Fixierungsmittels 12) und der ersten Außenseite des Grundkörpers 1 in einem Bereich von 40° bis 65° liegt. Ferner weist die Apertur 4 einen herausragenden Bereich 13 auf, der über eine an die erste Außenseite des Grundkörpers 1 angrenzende zweite Außenseite des Grundkörpers 1 herausragt. Hierbei ist die Aussparung 5 zwischen der zweiten Außenseite des Grundkörpers 1 und dem dritten Fixierungsmittel 12 angeordnet. Die Apertur weist außerdem zusätzlich ein drittes Dichtungselement 14 auf, das um das mindestens eine dritte Fixierungsmittel herum angeordnet ist und dichtend mit dem dritten Fixierungsmittel 12 verbunden ist.

Zudem umfasst die Flusszelle 100 zusätzlich ein Filterelement 15, welches in der Aussparung 5 zwischen dem ATR-Kristall 7 und der mit dem Zulauf 2 verbundenen Öffnung sowie zwischen dem ATR-Kristall 7 und der mit dem Ablauf 3 verbundenen Öffnung angeordnet ist. Bei dem Filterelement 15 kann es sich z.B. um ein Cellulose-Filterelement handeln, das eine Dicke im Bereich von 0,02 mm bis 0,2 mm aufweist.

In den zu messenden Substanzen, die durch die Durchflusszelle geleitet werden, können sich größere Moleküle (z.B. Proteine), Zellreste und Mikroorganismen befinden. Diese können sich auf dem ATR-Kristall ablagern, was dort zu Biofouling führen kann. Die Ablagerung bzw. das Biofouling führen in der Folge zu einer Verschlechterung der Messung, da die abgelagerten Komponenten zu einem überproportional großen Signal in der Messung bzw. dem gemessenen Spektrum führen und daher die Qualität der Messung beeinflussen. Zudem können auf dem ATR-Kristall befindliche Ablagerungen in einer folgenden Messung die dortige zu messende Substanz verunreinigen.

Durch das Filterelement 15 können in den zu messenden Substanzen enthaltene größere Moleküle (z.B. Proteine), Zellreste und Mikroorganismen vom ATR-Kristall 8 ferngehalten werden, da diese Komponenten durch das Filterelement 15 zurückgehalten werden, während die Flüssigkeit mit den für die optische Messung relevanten kleineren Molekülen durch das Filterelement 15 gelangt. In der Folge können Ablagerungen bzw. Biofouling auf dem ATR-Kristall 7 besser vermieden werden. Demzufolge können durch das Filterelement 15 Verunreinigungen der Flusszellenkammer und auch der (zukünftig) darin zu messenden Substanzen besser vermieden werden. Zudem können durch das Filterelement 15 auch in den zu messenden Substanzen vorhandene Gasbläschen, die bei einer Anlagerung an den ATR-Kristall 7 ebenfalls zu einer ungewünschten Beeinflussung der Messung bzw. des gemessenen Spektrums führen, vom ATR-Kristall 7 ferngehalten werden.

Ferner umfasst die Flusszelle 100 zusätzlich einen Filterhalter 16 zum Halten des Filterelements 15, der zwischen dem ATR-Kristall 7 und dem Filterelement 15 angeordnet ist. Der Filterhalter 16 weist eine Gitterstruktur und einen um die Gitterstruktur verlaufenden Rahmen aut. Vorzugsweise kann der Rahmen mit dem ATR-Kristall 7 in Kontakt stehen und die Gitterstruktur nicht mit dem ATR-Kristall 7 in Kontakt stehen. Beispielsweise kann die Gitterstruktur in einem Abstand von 0,01 mm bis 1 mm zum ATR-Kristall 7 angeordnet sein. Das Filterelement 15 kann vorzugsweise zwischen dem Rahmen und einem der Apertur 4 zugewandten zweiten Wandungsbereich der Aussparung 5 eingeklemmt sein. Vorzugsweise kann der der Apertur 4 zugewandte zentrale Wandungsbereich der Aussparung 5 drei Haltelemente aufweisen, wobei das Filterelement 15 zwischen der Gitterstruktur und den Haltelementen eingeklemmt sein kann. Außerdem kann der zentrale Wandungsbereich der Aussparung 5 eine gezackte Strukturierung aufweisen, durch welche die Gefahr von auf dem Filterelement 15 auftretendem Biofouling verringert werden kann.

### Ausführungsbeispiel 3

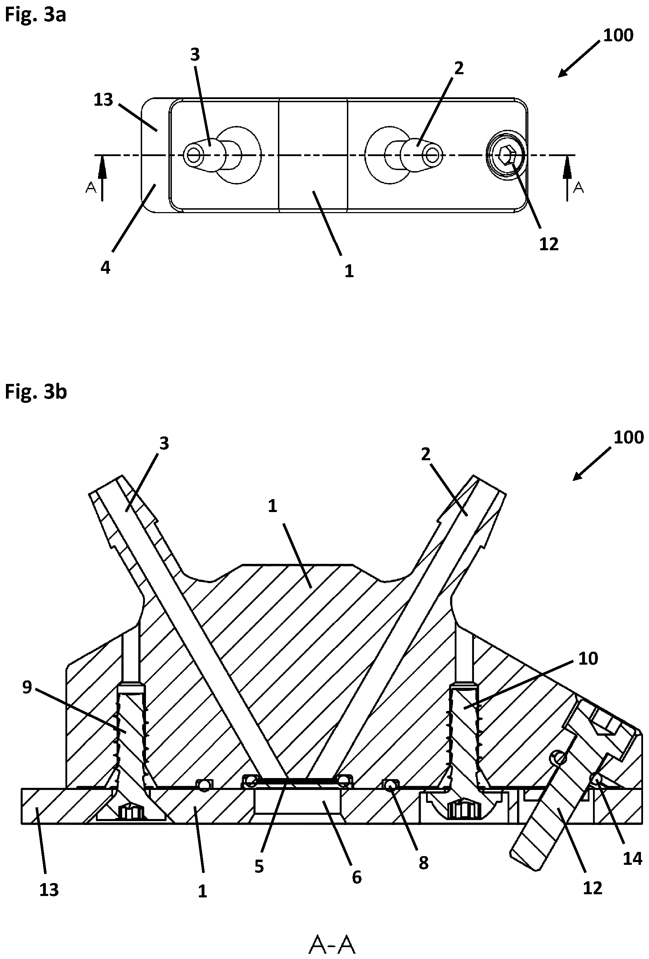

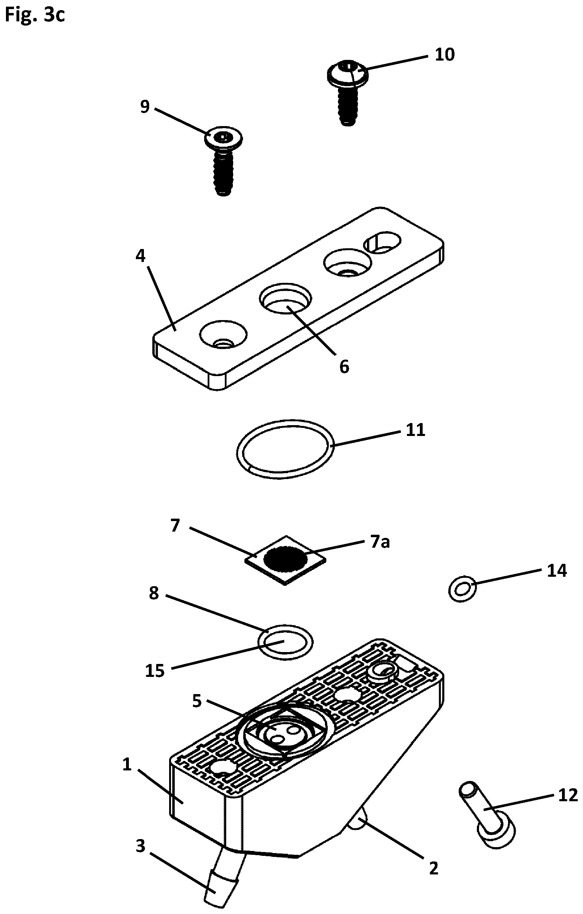

In den Fig. 3a bis 3c ist eine dritte beispielhafte Ausführungsform einer erfindungsgemäßen Flusszelle in mehreren Ansichten dargestellt. Fig. 3a zeigt eine Draufsicht der Flusszelle 100. In Fig. 3b ist eine seitliche Schnittansicht der Flusszelle 100 gezeigt, wobei der Schnitt entlang der in Fig. 3a dargestellten Linie A-A erfolgt ist. Zudem zeigt Fig. 3c eine Explosionsansicht der Flusszelle.

Die Flusszelle 100 umfasst einen polymeren Grundkörper 1 (z.B. aus dem Produkt "BioMed Clear" vom Hersteller formlabs) mit einem Zulauf 2 für zu messende Substanzen und einem Ablauf 3 für gemessene Substanzen sowie eine an einer ersten Außenseite des Grundköpers 1 angeordnete Apertur 4, die aus einer Legierung, z.B. Edelstahl, besteht. Der Grundkörper 1 und die Apertur 4 bestehen somit aus unterschiedlichen Materialien, die voneinander verschiedene thermische Ausdehnungskoeffizienten aufweisen.

An der ersten Außenseite des Grundkörpers 1 ist eine Aussparung 5 vorgesehen, die eine mit dem Zulauf 2 und dem Ablauf 3 fluidisch verbundene Flusszellenmesskammer enthält. Die Apertur 4 ist an der ersten Außenseite des Grundköpers 1 angeordnet, an welcher auch die Aussparung 5 vorgesehen ist, die die Flusszellenmesskammer enthält. Somit grenzt die Aussparung 5 mit der Flusszellenmesskammer an die Apertur 4 an. In diesem Bereich der Apertur 4 ist auch die Aperturblende 6 ausgeführt, sodass die Aperturblende 6 an die Aussparung 5 angrenzt.

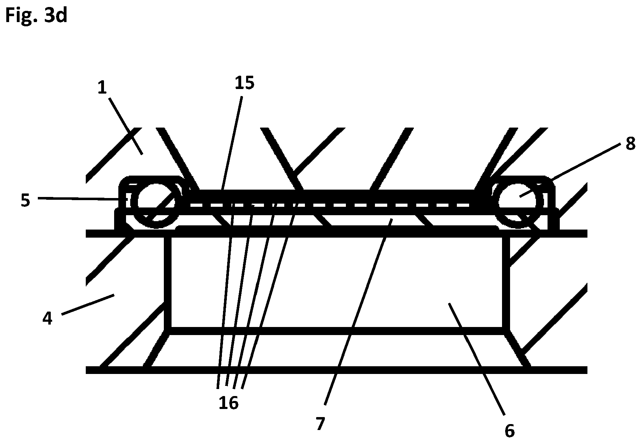

In Fig. 3d ein vergrößerter Ausschnitt aus Fig. 3a gezeigt, welcher eine vergrößerte seitliche Darstellung der Aussparung 5 sowie der darin angeordneten Elemente zeigt. Die Flusszelle 100 umfasst ferner eine Anordnung aus einem ATR-Kristall 7 und einem ersten Dichtungselement 8 zur Abdichtung der Flusszellenmesskammer, die zwischen der Apertur 4 und einem der Apertur 4 zugewandten ersten Wandungsbereich der Aussparung 5 eingeklemmt ist. Hierbei ist das erste Dichtungselement 8 auf einer von der Apertur 4 abgewandten Seite des ATR-Kristalls 7 angeordnet und steht dichtend mit dem ATR-Kristall 7 und dem ersten Wandungsbereich der Aussparung 5 in Kontakt. Ein der Apertur 4 zugewandter zentraler Wandungsbereich der Aussparung weist eine mit dem einen Zulauf 2 verbundene Öffnung sowie eine mit dem Ablauf 3 verbundene Öffnung auf.

Der ATR-Kristall 7, der z.B. aus Silicium besteht, umfasst mehrere Mikroprismen und weist auf einer der Apertur zugewandten Seite eine Strukturierung 7a mit V-förmigen Rillen bzw. Nuten, aufweist. Das erste Dichtungselement 8 besteht aus einem polymeren Material (z.B. Ethylen-Propylen-Dien-Kautschuk oder Silikon) und ist in Form eines kreisförmigen Rings (O-Ring) ausgebildet.

Die Flusszellenkammer ist nun so ausgebildet, dass sie durch den ATR-Kristall 7, das Dichtungselement 8 und Wandungsbereiche der Aussparung 5 begrenzt wird. Durch das Fixieren der Apertur 4 am Grundkörper 1 kann die den ATR-Kristall 7 und das Dichtungselement 8 umfassende Anordnung zwischen der Apertur 4 und dem ersten Wandungsbereich der Aussparung 5 eingeklemmt werden, wodurch eine Abdichtung der Flusszellenkammer erreicht werden kann.

Hierbei ist die Apertur 4 über ein erstes Fixierungsmittel 9 an einer ersten Fixierungsstelle am Grundkörper 1 fixierbar und über ein zweites Fixierungsmittel 10 an einer zweiten Fixierungsstelle fixierbar. Dabei ist die Aussparung 5 zwischen der ersten Fixierungsstelle (bzw. dem ersten Fixierungsmittel 9) und der zweiten Fixierungsstelle (bzw. dem zweiten Fixierungsmittel 10) angeordnet ist, wobei die erste Fixierungsstelle (bzw. das erste Fixierungsmittel 9) und die zweite Fixierungsstelle (bzw. das zweite Fixierungsmittel 10) den gleichen Abstand zur Aussparung 5 aufweisen. Beim ersten Fixierungsmittel 9 handelt es sich um eine Senkkopfschraube und beim zweiten Fixierungsmittel 10 um eine Linsenkopfschraube. Durch die Senkkopfschraube ist die Apertur 4 so an der ersten Fixierungsstelle am Grundkörper 1 fixierbar, dass der Grundkörper 1 und die Apertur 4 an der ersten Fixierungsstelle in einer parallel zur ersten Außenseite des Grundkörpers 1 verlaufenden x-Richtung, in einer parallel zur ersten Außenseite des Grundkörpers 1 verlaufenden y-Richtung und in einer senkrecht zur ersten Außenseite des Grundkörpers 1 verlaufenden z-Richtung im Wesentlichen nicht relativ zueinander bewegbar sind. Durch die Linsenkopfschraube ist die Apertur 4 so an der zweiten Fixierungsstell am Grundkörper 1 fixierbar, dass der Grundkörper 1 und die Apertur 4 an der zweiten Fixierungsstelle in der z-Richtung im Wesentlichen nicht relativ zueinander bewegbar sind und in der x-Richtung sowie in der y-Richtung jeweils nur in einem beschränkten Maße relativ zueinander bewegbar sind, sodass bei Temperaturänderungen erfolgende unterschiedliche Ausdehnungen und Kontraktionen der Komponenten der Flusszelle ausgeglichen werden können.

In der Folge kommt es bei starker Temperaturänderung (z.B. beim Sterilisieren bzw. Autoklavieren der Flusszelle) zwar zu einer unterschiedlichen Ausdehnung des Grundkörpers 1 und der Apertur 4 (aufgrund der verschiedenen thermischen Ausdehnungskoeffizienten, doch führt diese (aufgrund der gewissen Beweglichkeit in der x- und der y-Richtung) nicht zu einer Verbiegung der Komponenten, sodass es zu keiner Lockerung der eingeklemmten den ATR-Kristall 7 und das erste Dichtungselement 8 umfassenden Anordnung kommt. Auf diese Weise kann somit das Entstehen undichter Stellen in der Anordnung, an denen die Flusszellenmesskammer nicht mehr ausreichend abgedichtet ist, verhindert werden. Daher weist die Durchflusszelle - auch bei starker Temperaturänderung (z.B. beim Sterilisieren bzw. Autoklavieren der Flusszelle) - eine hohe Dichtigkeit auf, sodass Verunreinigungen nicht mehr durch undichte Stellen von außen in die Flusszellenkammer gelangen können. Demzufolge können Verunreinigungen der Flusszellenkammer sowie der darin gemessenen Substanzen durch von außen eindringende Verunreinigungen bzw. Mikroorganismen besser vermieden werden.

Die Flusszelle 100 umfasst zusätzlich ein zweites Dichtungselement 11, welches um die Aussparung 5 herum angeordnet ist, wobei das zweite Dichtungselement aus einem polymeren Material (z.B. Ethylen-Propylen-Dien-Kautschuk oder Silikon) besteht und in Form eines kreisförmigen Rings (O-Ring) ausgebildet ist.

Im Weiteren umfasst die Flusszelle 100 ein einzelnes drittes Fixierungsmittel 12 zum Befestigen der Flusszelle an einem Modulhauptkörper eines optischen Moduls. Beim dritten Fixierungsmittel 12 handelt es sich um eine Zylinderkopfschraube. Diese ist so angeordnet, dass der Winkel zwischen der Haupterstreckungsrichtung der Zylinderkopfschraube (bzw. des dritten Fixierungsmittels 12) und der ersten Außenseite des Grundkörpers 1 in einem Bereich von 40° bis 65° liegt. Ferner weist die Apertur 4 einen herausragenden Bereich 13 auf, der über eine an die erste Außenseite des Grundkörpers 1 angrenzende zweite Außenseite des Grundkörpers 1 herausragt. Hierbei ist die Aussparung 5 zwischen der zweiten Außenseite des Grundkörpers 1 und dem dritten Fixierungsmittel 12 angeordnet. Die Apertur weist außerdem zusätzlich ein drittes Dichtungselement 14 auf, das um das mindestens eine dritte Fixierungsmittel herum angeordnet ist und dichtend mit dem dritten Fixierungsmittel 12 verbunden ist.

Zudem umfasst die Flusszelle 100 zusätzlich ein Filterelement 15, welches in der Aussparung 5 zwischen dem ATR-Kristall 7 und der mit dem Zulauf 2 verbundenen Öffnung sowie zwischen dem ATR-Kristall 7 und der mit dem Ablauf 3 verbundenen Öffnung angeordnet ist. Das Filterelement 15 ist am ersten Dichtungselement 8 befestigt ist. Hierbei ist es mit dem Innenrand des ringförmigen ersten Dichtungselements 8 stoffschlüssig verbunden, sodass der (gesamte) zwischen dem Innenrand des ringförmigen ersten Dichtungselements 8 liegende Bereich durch das Filterelement 15 verschlossen wird. Das erste Dichtungselement 8 ist somit um das Filterelement 15 herum angeordnet bzw. verläuft am Rand des Filterelements 15. Das erste Dichtungselement 8 und das Filterelement 15 können hier auch als gemeinsames Dichtungs-FilterElement angesehen werden. Bei dem Filterelement 15 kann es sich z.B. um ein Cellulose-Filterelement handeln, das eine Dicke im Bereich von 0,02 mm bis 0,2 mm aufweist.

Das Filterelement 15 ist in direktem Kontakt zu mindestens einer auf dem ATR-Kristall aufgebrachten Fotolackbeschichtung 16 angeordnet. Die Fotolackbeschichtung 16 ist streifenförmig auf dem ATR-Kristall aufgebracht, wobei die Anordnung der Fotolackbeschichtung auf dem ATR-Kristall an die Strukturierung 7a des ATR-Kristalls, die der ATR-Kristall auf der der Apertur zugewandten Seite aufweist, angepasst ist. Die Fotolackbeschichtung kann z.B. eine Dicke im Bereich von 0,1 µm bis 100 µm aufweisen.

In den zu messenden Substanzen, die durch die Durchflusszelle geleitet werden, können sich größere Moleküle (z.B. Proteine), Zellreste und Mikroorganismen befinden. Diese können sich auf dem ATR-Kristall ablagern, was dort zu Biofouling führen kann. Die Ablagerung bzw. das Biofouling führen in der Folge zu einer Verschlechterung der Messung, da die abgelagerten Komponenten zu einem überproportional großen Signal in der Messung bzw. dem gemessenen Spektrum führen und daher die Qualität der Messung beeinflussen. Zudem können auf dem ATR-Kristall befindliche Ablagerungen in einer folgenden Messung die dortige zu messende Substanz verunreinigen.

Durch das Filterelement 15 können in den zu messenden Substanzen enthaltene größere Moleküle (z.B. Proteine), Zellreste und Mikroorganismen vom ATR-Kristall 8 ferngehalten werden, da diese Komponenten durch das Filterelement 15 zurückgehalten werden, während die Flüssigkeit mit den für die optische Messung relevanten kleineren Molekülen durch das Filterelement 15 gelangt. In der Folge können Ablagerungen bzw. Biofouling auf dem ATR-Kristall 7 besser vermieden werden. Demzufolge können durch das Filterelement 15 Verunreinigungen der Flusszellenkammer und auch der (zukünftig) darin zu messenden Substanzen besser vermieden werden. Zudem können durch das Filterelement 15 auch in den zu messenden Substanzen vorhandene Gasbläschen, die bei einer Anlagerung an den ATR-Kristall 7 ebenfalls zu einer ungewünschten Beeinflussung der Messung bzw. des gemessenen Spektrums führen, vom ATR-Kristall 7 ferngehalten werden.

### Ausführungsbeispiel 4

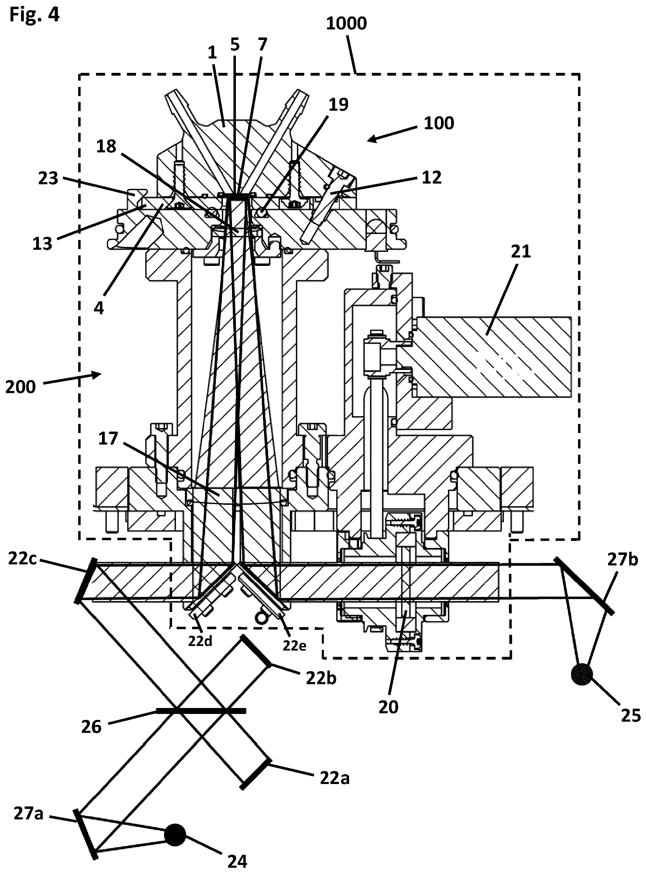

In Fig. 4 ist Schnittansicht einer beispielhaften Ausführungsform eines erfindungsgemäßen Spektrometers dargestellt. Dieses umfasst eine beispielhafte Ausführungsform eines erfindungsgemäßen optischen Moduls 1000 (gekennzeichnet durch den gestrichelten Rahmen in Fig. 4), welches einen Modulhauptkörper 200 sowie eine beispielhafte erfindungsgemäße Ausführungsform einer erfindungsgemäßen Flusszelle 100, die am Modulhauptkörper 200 befestigt ist, umfasst.

Der Modulhauptkörper 200 umfasst eine Linse 17 zum Einkoppeln eines auf den ATR-Kristall 7 einfallenden Lichtstrahls sowie zum Auskoppeln eines vom ATR-Kristall 7 reflektierten Lichtstrahls, wobei die Linse 17 z.B. aus Zinkselenid besteht. Ferner umfasst der Modulhauptkörper 200 ein optisches Fenster 18, welches zwischen dem ATR-Kristall 7 und der Linse 17 angeordnet ist, wobei das optische Fenster 18 z.B. aus Zinksulfid besteht. Der Modulhauptkörper 200 umfasst außerdem ein an einer der Flusszelle 100 zugewandten Außenseite des Modulhauptkörpers 200 angeordnetes viertes Dichtungselement 19, das mit einer dem Modulhauptkörper 200 zugewandten Seite der Flusszelle 100 dichtend in Kontakt steht, wobei das vierte Dichtungselement 19 in Form eines kreisförmigen Rings (O-Ring) ausgebildet ist. Zudem umfasst der Modulhauptkörper 200 einen Polarisator 20 zur Polarisierung eines vom ATR-Kristall 7 reflektierten und danach ausgekoppelten Lichtstrahls, einen Motor 21 zum Drehen des Polarisators 20 und zwei Spiegel 22d, 22e.

Die Flusszelle 100 ist über ein einzelnes drittes Fixierungsmittel 12 sowie ein an einer der Flusszelle 100 zugewandten Außenseite des Modulhauptkörpers 200 angeordnetes Anschlagelement 23 am Modulhauptkörper befestigt, wobei das Anschlagelement 23 eine Anschlagfläche aufweist, gegen die die Flusszelle 100 durch das eine dritte Fixierungsmittel 12 gedrückt wird. Bei dem dritten Fixierungsmittel 12 handelt es sich dabei um eine Zylinderkopfschraube. Diese ist so angeordnet, dass der Winkel zwischen der Haupterstreckungsrichtung der Zylinderkopfschraube (bzw. des dritten Fixierungsmittels 12) und der ersten Außenseite des Grundkörpers 1 in einem Bereich von 40° bis 65° liegt. Der Winkel zwischen der Anschlagfläche und der ersten Außenseite des Grundkörpers 1 liegt zudem in einem Bereich von 40° bis 50°. Ferner weist die Apertur 4 einen herausragenden Bereich 13 auf, der über eine an die erste Außenseite des Grundkörpers 1 angrenzende zweite Außenseite des Grundkörpers 1 herausragt, wobei der herausragende Bereich 13 gegen die Anschlagfläche des Anschlagelements 23 gedrückt wird. Hierbei ist die Aussparung 5 zwischen der zweiten Außenseite des Grundkörpers 1 und dem dritten Fixierungsmittel 12 angeordnet.

Durch das dritte Fixierungsmittel 12 und das Anschlagelement 23 kann die Flusszelle 100 auf einfache Weise fest mit dem Modulhauptkörper 200 verbunden werden. Hierbei ist das dritte Fixierungsmittel 12 in einem bestimmten Winkel zur ersten Außenseite des Grundkörpers 1 angebracht, sodass die Flusszelle 100 in einem bestimmten Winkel gegen den Modulhauptkörper 200 sowie gegen die Anschlagfläche des Anschlagelements 23 gedrückt wird, d.h. eine erste Kraftkomponente geht in Richtung des Modulhauptkörpers 200 und eine zweite Kraftkomponente geht in Richtung der Anschlagfläche. Die Anschlagfläche kann nun in einem entsprechenden Winkel zur ersten Außenseite des Grundkörpers 1 angeordnet sein, um so die vom dritten Fixierungsmittel 12 auf die Anschlagfläche ausgeübte Kraftkomponente gut aufnehmen und auf den Modulhauptkörper 200 umlenken zu können. Auf diese Weise kann eine sehr feste Fixierung erreicht werden.

Das Spektrometer umfasst ferner eine Lichtquelle 24, einen Lichtdetektor 25, einen Strahlteiler 26, drei Spiegel 22a, 22b, 22c sowie zwei parabolische Spiegel 27a, 27b.

### Ausführungsbeispiel 5

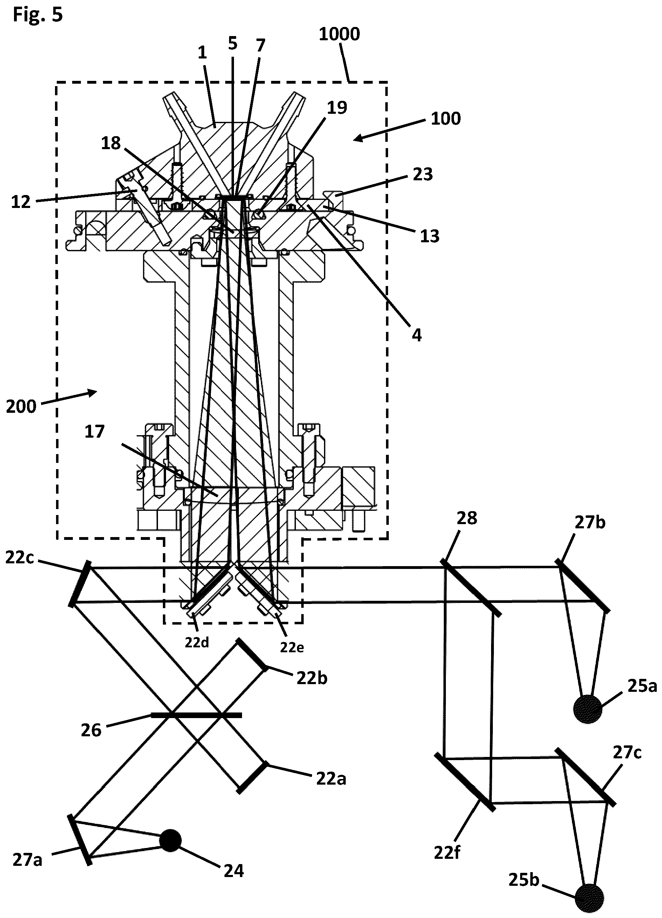

In Fig. 5 ist Schnittansicht einer beispielhaften Ausführungsform eines erfindungsgemäßen Spektrometers dargestellt. Dieses umfasst eine beispielhafte Ausführungsform eines erfindungsgemäßen optischen Moduls 1000 (gekennzeichnet durch den gestrichelten Rahmen in Fig. 5), welches einen Modulhauptkörper 200 sowie eine beispielhafte Ausführungsform einer erfindungsgemäßen Flusszelle 100, die am Modulhauptkörper 200 befestigt ist, umfasst.

Der Modulhauptkörper 200 umfasst eine Linse 17 zum Einkoppeln eines auf den ATR-Kristall 7 einfallenden Lichtstrahls sowie zum Auskoppeln eines vom ATR-Kristall 7 reflektierten Lichtstrahls, wobei die Linse 17 z.B. aus Zinkselenid besteht. Ferner umfasst der Modulhauptkörper 200 ein optisches Fenster 18, welches zwischen dem ATR-Kristall 7 und der Linse 17 angeordnet ist, wobei das optische Fenster 18 z.B. aus Zinksulfid besteht. Der Modulhauptkörper 200 umfasst außerdem ein an einer der Flusszelle 100 zugewandten Außenseite des Modulhauptkörpers 200 angeordnetes vierten Dichtungselement 19, das mit einer dem Modulhauptkörper 200 zugewandten Seite der Flusszelle 100 dichtend in Kontakt steht, wobei das vierte Dichtungselement 19 in Form eines kreisförmigen Rings (O-Ring) ausgebildet ist. Zudem umfasst der Modulhauptkörper 200 zwei Spiegel 22d, 22e.

Die Flusszelle 100 ist über ein einzelnes drittes Fixierungsmittel 12 sowie ein an einer der Flusszelle 100 zugewandten Außenseite des Modulhauptkörpers 200 angeordnetes Anschlagelement 23 am Modulhauptkörper befestigt, wobei das Anschlagelement 23 eine Anschlagfläche aufweist, gegen die die Flusszelle 100 durch das eine dritte Fixierungsmittel 12 gedrückt wird. Bei dem dritten Fixierungsmittel 12 handelt es sich dabei um eine Zylinderkopfschraube. Diese ist so angeordnet, dass der Winkel zwischen der Haupterstreckungsrichtung der Zylinderkopfschraube (bzw. des dritten Fixierungsmittels 12) und der ersten Außenseite des Grundkörpers 1 in einem Bereich von 40° bis 65° liegt. Der Winkel zwischen der Anschlagfläche und der ersten Außenseite des Grundkörpers 1 liegt zudem in einem Bereich von 40° bis 50°. Ferner weist die Apertur 4 einen herausragenden Bereich 13 auf, der über eine an die erste Außenseite des Grundkörpers 1 angrenzende zweite Außenseite des Grundkörpers 1 herausragt, wobei der herausragende Bereich 13 gegen die Anschlagfläche des Anschlagelements 23 gedrückt wird. Hierbei ist die Aussparung 5 zwischen der zweiten Außenseite des Grundkörpers 1 und dem dritten Fixierungsmittel 12 angeordnet.

Durch das dritte Fixierungsmittel 12 und das Anschlagelement 23 kann die Flusszelle 100 auf einfache Weise fest mit dem Modulhauptkörper 200 verbunden werden. Hierbei ist das dritte Fixierungsmittel 12 in einem bestimmten Winkel zur ersten Außenseite des Grundkörpers 1 angebracht, sodass die Flusszelle 100 in einem bestimmten Winkel gegen den Modulhauptkörper 200 sowie gegen die Anschlagfläche des Anschlagelements 23 gedrückt wird, d.h. eine erste Kraftkomponente geht in Richtung des Modulhauptkörpers 200 und eine zweite Kraftkomponente geht in Richtung der Anschlagfläche. Die Anschlagfläche kann nun in einem entsprechenden Winkel zur ersten Außenseite des Grundkörpers 1 angeordnet sein, um so die vom dritten Fixierungsmittel 12 auf die Anschlagfläche ausgeübte Kraftkomponente gut aufnehmen und auf den Modulhauptkörper 200 umlenken zu können. Auf diese Weise kann eine sehr feste Fixierung erreicht werden.

Das Spektrometer umfasst ferner eine Lichtquelle 24, zwei Lichtdetektoren 25a, 25b, einen Spektrometer-internen Polarisator 28, einen Strahlteiler 26, vier Spiegel 22a, 22b, 22c, 22f sowie drei parabolische Spiegel 27a, 27b, 27c.

## Patentansprüche

1. Flusszelle (100) für optische Messungen, umfassend einen Grundkörper (1) mit mindestens einem Zulauf (2) und mindestens einem Ablauf (3) sowie eine an einer ersten Außenseite des Grundköpers (1) angeordnete Apertur (4), wobei an der ersten Außenseite des Grundkörpers (1) eine Aussparung (5) vorgesehen ist, die eine mit dem mindestens einen Zulauf (2) und dem mindestens einen Ablauf (3) verbundene Flusszellenmesskammer enthält, wobei der Grundkörper (1) aus mindestens einem Material besteht, welches einen ersten thermischen Ausdehnungskoeffizienten aufweist, und die Apertur (4) aus mindestens einem Material besteht, welches einen sich vom ersten thermischen Ausdehnungskoeffizienten unterscheidenden zweiten thermischen Ausdehnungskoeffizienten aufweist,
wobei die Flusszelle (100) ferner eine einen ATR-Kristall (7) und mindestens ein erstes Dichtungselement (8) zur Abdichtung der Flusszellenmesskammer umfassende zwischen der Apertur (4) und mindestens einem ersten Wandungsbereich der Aussparung (5) eingeklemmte Anordnung umfasst, wobei das mindestens eine erste Dichtungselement (8) auf einer von der Apertur (4) abgewandten Seite des ATR-Kristalls (7) angeordnet ist,
wobei die Apertur (4) über mindestens ein erstes Fixierungsmittel (9) so an mindestens einer ersten Fixierungsstelle am Grundkörper (1) fixierbar ist, dass der Grundkörper (1) und die Apertur (4) an der mindestens einen ersten Fixierungsstelle in einer parallel zur ersten Außenseite des Grundkörpers (1) verlaufenden x-Richtung, in einer parallel zur ersten Außenseite des Grundkörpers (1) verlaufenden y-Richtung und in einer senkrecht zur ersten Außenseite des Grundkörpers (1) verlaufenden z-Richtung im Wesentlichen nicht relativ zueinander bewegbar sind, und
wobei die Apertur über mindestens ein zweites Fixierungsmittel (10) so an mindestens einer zweiten Fixierungsstelle am Grundkörper (1) fixierbar ist, dass der Grundkörper (1) und die Apertur (4) an der mindestens einen zweiten Fixierungsstelle in der z-Richtung im Wesentlichen nicht relativ zueinander bewegbar sind und in der x-Richtung sowie in der y-Richtung relativ zueinander bewegbar sind, und zwar jeweils nur in dem Maße, dass bei Temperaturänderungen erfolgende unterschiedliche Ausdehnungen und/oder Kontraktionen der Komponenten der Flusszelle (100) ausgeglichen werden können.

2. Flusszelle (100) nach dem vorhergehenden Anspruch, **dadurch gekennzeichnet, dass** die Apertur (4) über das mindestens eine zweite Fixierungsmittel (10) so an der mindestens einen zweiten Fixierungsstelle am Grundkörper (1) fixierbar ist, dass der Grundkörper (1) und die Apertur (4) an der mindestens einen zweiten Fixierungsstelle in der z-Richtung im Wesentlichen nicht relativ zueinander bewegbar sind und in der x-Richtung sowie in der y-Richtung jeweils um mindestens 0,01 mm, bevorzugt mindestens 0,05 mm, besonders bevorzugt mindestens 0,1 mm, und/oder um höchstens 1 mm, bevorzugt höchstens 0,8 mm, besonders bevorzugt höchstens 0,5 mm, relativ zueinander bewegbar sind.

3. Flusszelle (100) nach einem der vorhergehenden Ansprüche, **dadurch gekennzeichnet, dass**
- das mindestens eine erste Fixierungsmittel (9) ausgewählt ist aus der Gruppe bestehend aus Senkkopfschrauben, sowie Kombinationen hiervon, wobei das mindestens eine erste Fixierungsmittel (9) vorzugsweise mindestens eine Senkkopfschraube ist, und/oder
- das mindestens eine zweite Fixierungsmittel (10) ausgewählt ist aus der Gruppe bestehend aus Linsenkopfschrauben, Nieten, Zylinderkopfschrauben, sowie Kombinationen hiervon, wobei das mindestens eine erste Fixierungsmittel (10) vorzugsweise mindestens eine Linsenkopfschraube ist.

4. Flusszelle (100) nach einem der vorhergehenden Ansprüche, **dadurch gekennzeichnet, dass**
- das mindestens eine Material, aus dem der Grundkörper (1) besteht, mindestens ein Polymer ist, welches vorzugsweise ausgewählt ist aus der Gruppe bestehend aus Polyetheretherketonen, Polytetrafluorethylen, Polypropylen, Polysulfonen, Polyethersulfonen, Polycarbonaten, Polyvinylchloriden, Polylactiden, Polyamiden, thermoplastischen Polyurethanen, Acrylnitril-Butadien-Styrol, UV-aushärtenden Kunstharzen, sowie Mischungen hiervon, und/oder
- das mindestens eine Material, aus dem die Apertur (4) besteht, ausgewählt ist aus der Gruppe bestehend aus Metallen, z.B. Eisen; Legierungen, bevorzugt Eisen-haltigen Legierungen, z.B. Edelstahl; Polymeren, z.B. Polyetheretherketonen; sowie Mischungen und Kombinationen hiervon, wobei die Apertur (4) vorzugsweise Edelstahl enthält oder daraus besteht.

5. Flusszelle (100) nach einem der vorhergehenden Ansprüche, **dadurch gekennzeichnet, dass** der ATR-Kristall (7)
- mindestens ein Material enthält oder aus diesem besteht, welches für Licht mit einer Wellenlänge im Bereich von 2 µm bis 20 µm, bevorzugt von 4 µm bis 12 µm, zumindest teilweise transparent ist, wobei der ATR-Kristalle (7) bevorzugt mindestens ein Material enthält oder daraus besteht, welches ausgewählt ist aus der Gruppe bestehend aus Silicium, Diamant, Germanium, Zinkselenid, Zinksulfid, sowie Mischungen und Kombinationen hiervon, wobei der ATR-Kristalle besonders bevorzugt Silicium enthält oder daraus besteht, und/oder
- mehrere Mikroprismen umfasst, und/oder
- auf einer der Apertur zugewandten Seite eine Strukturierung (7a), vorzugsweise Strukturierung (7a) mit Rillen oder Nuten, aufweist.

6. Flusszelle (100) nach einem der vorhergehenden Ansprüche, **dadurch gekennzeichnet, dass**
- das mindestens eine erste Dichtungselement (8)
• mindestens ein Polymer enthält oder daraus besteht, welches ausgewählt ist aus der Gruppe bestehend aus Ethylen-Propylen-Dien-Kautschuken, Silikonen, sowie Mischungen hiervon, und/oder
• in Form eines kreisförmigen Rings ausgebildet ist, und/oder
• dichtend mit dem ATR-Kristall (7) und/oder dem mindestens einen ersten Wandungsbereich der Aussparung (5) in Kontakt steht
und/oder
- die Flusszelle (100) mindestens ein zweites Dichtungselement (11) umfasst, welches um die Aussparung (5) herum angeordnet ist, wobei das mindestens eine zweite Dichtungselement (11) vorzugsweise
• mindestens ein Polymer enthält oder daraus besteht, welches ausgewählt ist aus der Gruppe bestehend aus Ethylen-Propylen-Dien-Kautschuken, Silikonen, sowie Mischungen hiervon, und/oder
• in Form eines kreisförmigen Rings ausgebildet ist, und/oder
• zumindest teilweise in einer um die Aussparung (5) herum angeordneten an der ersten Außenseite des Grundkörpers (1) vorgesehenen weiteren Aussparung angeordnet ist, und/oder
• dichtend mit dem Grundkörper (1) und/oder der Apertur (4) in Kontakt steht.

7. Flusszelle (100) nach einem der vorhergehenden Ansprüche, **dadurch gekennzeichnet, dass** die Flusszelle (100) mindestens ein Filterelement (15) umfasst, welches in der Aussparung (5) zwischen dem ATR-Kristall (7) und mindestens einer mit dem mindestens einen Zulauf (2) verbundenen Öffnung und/oder zwischen dem ATR-Kristall (7) und mindestens einer mit dem mindestens einen Ablauf (3) verbundenen Öffnung angeordnet ist, wobei vorzugsweise
- das mindestens eine Filterelement (15) ausgewählt ist aus der Gruppe bestehend aus Cellulose-Filterelementen, Papier-Filterelementen, Glasfaserfilterelementen, sowie Kombinationen hiervon, und/oder
- eine Dicke im Bereich von 0,001 mm bis 5 mm, bevorzugt von 0,01 mm bis 1 mm, besonders bevorzugt von 0,02 mm bis 0,2 mm, aufweist.

8. Flusszelle (100) nach Anspruch 7, **dadurch gekennzeichnet, dass** die Flusszelle (100) zusätzlich mindestens einen Filterhalter (16) zum Halten des mindestens einen Filterelements (15) umfasst, der zwischen dem ATR-Kristall (7) und dem mindestens einen Filterelement (15) angeordnet ist,
wobei der mindestens eine Filterhalter (16) vorzugsweise eine Gitterstruktur und einen um die Gitterstruktur verlaufenden Rahmen aufweist, wobei
- der Rahmen mit dem ATR-Kristall (7) in Kontakt steht und die Gitterstruktur nicht mit dem ATR-Kristall (7) in Kontakt steht, wobei die Gitterstruktur vorzugsweise in einem Abstand von 0,001 mm bis 5 mm, bevorzugt von 0,005 mm bis 2 mm, besonders bevorzugt von 0,008 mm bis 1 mm, ganz besonders bevorzugt von 0,01 mm bis 0,1 mm, zum ATR-Kristall (7) angeordnet ist, und/oder
- das mindestens eine Filterelement (15) zwischen dem Rahmen und mindestens einem der Apertur (4) zugewandten zweiten Wandungsbereich der Aussparung (5) eingeklemmt ist, und/oder
- ein der Apertur (4) zugewandter zentraler Wandungsbereich der Aussparung (5) mindestens ein Haltelement, vorzugsweise mindestens zwei Halteelemente, aufweist, wobei das mindestens eine Filterelement (15) zwischen der Gitterstruktur und dem mindestens einen Haltelement eingeklemmt ist.

9. Flusszelle (100) nach Anspruch 7, **dadurch gekennzeichnet, dass** das mindestens eine Filterelement (15) in direktem Kontakt zu mindestens einer auf dem ATR-Kristall (7) aufgebrachten Fotolackbeschichtung (16) angeordnet ist, wobei vorzugweise
- die mindestens eine Fotolackbeschichtung (16) eine Dicke im Bereich von 0,1 µm bis 100 µm, bevorzugt von 1 µm bis 50 µm, besonders bevorzugt von 5 µm bis 20 µm, aufweist, und/oder
- die mindestens eine Fotolackbeschichtung (16) in Form eines Gitters oder streifenförmig auf dem ATR-Kristall (7) aufgebracht ist, wobei die Anordnung der Fotolackbeschichtung (16) auf dem ATR-Kristall (7) bevorzugt an eine Strukturierung des ATR-Kristalls (7), die der ATR-Kristall (7) auf einer der Apertur (4) zugewandten Seite aufweist, angepasst ist, und/oder
- das mindestens eine Filterelement (15) am mindestens einen ersten Dichtungselement (8) befestigt ist, bevorzugt mit dem mindestens einen ersten Dichtungselement (8) stoffschlüssig verbunden ist.

10. Flusszelle (100) nach einem der vorhergehenden Ansprüche, **dadurch gekennzeichnet, dass** die Aussparung (5)
- zwischen der mindestens einen ersten Fixierungsstelle und der mindestens einen zweiten Fixierungsstelle angeordnet ist, wobei die mindestens eine erste Fixierungsstelle und die mindestens eine zweite Fixierungsstelle vorzugsweise den gleichen Abstand zur Aussparung (5) aufweisen, und/oder
- an einem der Apertur (4) zugewandten zentralen Wandungsbereich der Aussparung (5) eine Strukturierung, vorzugsweise eine gezackte Strukturierung, aufweist, und/oder
- an einem der Apertur (4) zugewandten zentralen Wandungsbereich der Aussparung (5) mindestens eine mit dem mindestens einen Zulauf (2) verbundene Öffnung aufweist, und/oder
- an einem der Apertur (4) zugewandten zentralen Wandungsbereich der Aussparung (5) mindestens eine mit dem mindestens einen Ablauf (3) verbundene Öffnung aufweist.

11. Flusszelle (100) nach einem der vorhergehenden Ansprüche, **dadurch gekennzeichnet, dass** die Flusszelle (100) mindestens ein drittes Fixierungsmittel (12), vorzugsweise ein einzelnes drittes Fixierungsmittel (12), zum Befestigen der Flusszelle (100) an einem Modulhauptkörper eines optischen Moduls umfasst, wobei
- das mindestens eine dritte Fixierungsmittel (12) eine Haupterstreckungsrichtung aufweist, wobei ein Winkel zwischen dieser Haupterstreckungsrichtung und der ersten Außenseite des Grundkörpers (1) in einem Bereich von 20° bis 85°, bevorzugt von 30° bis 70°, besonders bevorzugt von 40° bis 65°, liegt, und/oder
- das mindestens eine dritte Fixierungsmittel (12) ausgewählt ist aus der Gruppe bestehend aus Zylinderkopfschrauben, Linsenkopfschrauben, sowie Kombinationen hiervon, wobei das mindestens eine dritte Fixierungsmittel (12) vorzugsweise mindestens eine Zylinderkopfschraube, besonders bevorzugt eine einzelne Zylinderkopfschraube, ist, und/oder
- die Apertur (4) einen herausragenden Bereich (13) aufweist, der über eine zweite Außenseite des Grundkörpers (1) herausragt, wobei die Aussparung (5) vorzugweise zwischen der zweiten Außenseite des Grundkörpers (1) und dem mindestens einen dritten Fixierungsmittel (12) angeordnet ist, und/oder
- die Flusszelle (100) zusätzlich mindestens ein drittes Dichtungselement (14) aufweist, das um das mindestens eine dritte Fixierungsmittel (12) herum angeordnet ist und dichtend mit dem mindestens einen dritten Fixierungsmittel (12) verbunden ist.

12. Optisches Modul (1000) umfassend einen Modulhauptkörper (200) sowie eine Flusszelle (100) gemäß einem der vorhergehenden Ansprüche, die am Modulhauptkörper befestigt ist.

13. Optisches Modul (1000) nach Anspruch 12, **dadurch gekennzeichnet, dass** die Flusszelle (100) über mindestens ein drittes Fixierungsmittel (12), bevorzugt ein einzelnes drittes Fixierungsmittel (12), sowie ein an einer der Flusszelle (100) zugewandten Außenseite des Modulhauptkörpers (200) angeordnetes Anschlagelement (23) am Modulhauptkörper (200) befestigt ist, wobei das Anschlagelement (23) eine Anschlagfläche aufweist, gegen die die Flusszelle (100) durch das mindestens eine dritte Fixierungsmittel (12) gedrückt wird, und wobei vorzugsweise
- ein Winkel zwischen der Anschlagfläche und der ersten Außenseite des Grundkörpers (1) in einem Bereich von 20° bis 85°, bevorzugt von 30° bis 65°, besonders bevorzugt von 40° bis 50°, liegt, und/oder
- das mindestens eine dritte Fixierungsmittel (12) eine Haupterstreckungsrichtung aufweist, wobei ein Winkel zwischen dieser Haupterstreckungsrichtung und der ersten Außenseite des Grundkörpers (1) in einem Bereich von 20° bis 85°, bevorzugt von 30° bis 70°, besonders bevorzugt von 40° bis 65°, liegt, und/oder
- das mindestens eine dritte Fixierungsmittel (12) ausgewählt ist aus der Gruppe bestehend aus Zylinderkopfschrauben, Linsenkopfschrauben, sowie Kombinationen hiervon, wobei das mindestens eine dritte Fixierungsmittel (12) vorzugsweise mindestens eine Zylinderkopfschraube, besonders bevorzugt eine einzelne Zylinderkopfschraube, ist, und/oder
- die Apertur (4) einen herausragenden Bereich (13) aufweist, der über eine zweite Außenseite des Grundkörpers (1) herausragt, wobei der herausragende Bereich (13) gegen die Anschlagfläche gedrückt wird, und wobei die Aussparung (5) vorzugweise zwischen der zweiten Außenseite des Grundkörpers (1) und dem mindestens einen dritten Fixierungsmittel (12) angeordnet ist, und/oder
- die Flusszelle (100) zusätzlich mindestens ein drittes Dichtungselement (14) aufweist, das um das mindestens eine dritte Fixierungsmittel (12) herum angeordnet ist.

14. Optisches Modul (1000) nach Anspruch 12 oder 13, **dadurch gekennzeichnet, dass** der Modulhauptkörper (200)
- eine Linse (17) zum Einkoppeln eines auf den ATR-Kristall (7) einfallenden Lichtstrahls sowie zum Auskoppeln eines vom ATR-Kristall (7) reflektierten Lichtstrahls umfasst, wobei die Linse (17) vorzugsweise Zinkselenid enthält oder daraus besteht, und/oder
- ein optisches Fenster (18) umfasst, welches zwischen dem ATR-Kristall (7) und der Linse (17) angeordnet ist, wobei das optische Fenster (18) vorzugsweise Zinksulfid enthält oder daraus besteht, und/oder
- mindestens ein an einer der Flusszelle (100) zugewandten Außenseite des Modulhauptkörpers (200) angeordnetes viertes Dichtungselement (19) umfasst, das mit einer dem Modulhauptkörper (200) zugewandten Seite der Flusszelle (100) dichtend in Kontakt steht, wobei das mindestens eine vierte Dichtungselement (19 vorzugsweise in Form eines kreisförmigen Rings ausgebildet ist, und/oder
- einen Polarisator (20) zur Polarisierung eines vom ATR-Kristall (7) reflektierten und danach ausgekoppelten Lichtstrahls umfasst.

15. Spektrometer umfassend mindestens eine Lichtquelle, mindestens einen Lichtdetektor sowie ein optisches Modul (1000) gemäß einem der Ansprüche 12 bis 14, wobei das Spektrometer vorzugsweise ein FTIR-Spektrometer oder ein QCL-basiertes Infrarotspektrometer ist.

## Claims

1. Flow cell (100) for optical measurements, comprising a base body (1) with at least one inlet (2) and at least one outlet (3) as well as an aperture (4) arranged at a first outer side of the base body (1), a recess (5) being provided at the first outer side of the base body (1); this recess containing a flow cell measuring chamber connected to the at least one inlet (2) and the at least one outlet (3), the base body (1) consisting of at least one material that has a first thermal expansion coefficient,
and the aperture (4) consisting of at least one material that has a second thermal expansion coefficient that differs from the first thermal expansion coefficient,
the flow cell (100) further comprising an arrangement comprising an ATR crystal (7) and at least one first sealing element (8) for sealing the flow cell measuring chamber, clamped between the aperture (4) and at least one first wall region of the recess (5), the at least one first sealing element (8) being arranged on a side of the ATR crystal (7) facing away from the aperture (4),
the aperture (4) being fixable via at least one first fixing agent (9) to at least one first fixing location at the base body (1) such that the base body (1) and the aperture (4) are essentially immovable relative to each other at the at least one first fixing point in an x-direction running parallel to the first outer side of the base body (1), in a y-direction running parallel to the first outer side of the base body (1) and in a z-direction running perpendicular to the first outer side of the base body (1), and
the aperture being fixable via at least one second fixing agent (10) to at least one second fixing location at the base body (1) such that the base body (1) and the aperture (4) are essentially immovable relative to each other at the at least one second fixing location in the z-direction and are movable relative to each other at the at least one second fixing location in the x-direction and in the y-direction, in each case only to the extent that different expansions and/or contractions of the components of the flow cell (100) occurring during temperature changes can be compensated for.

2. Flow cell (100) according to the preceding claim, **characterised in that** the aperture (4) is fixable to the at least one second fixing location at the base body (1) via the at least one second fixing agent (10) such that the base body (1) and the aperture (4) are essentially immovable relative to each other at the at least one second fixing point in the z-direction and are movable relative to each other at the at least one second fixing point in the x-direction and in the y-direction by at least 0.01 mm, preferably at least 0.05 mm, particularly preferably at least 0.1 mm, and/or by a maximum of 1 mm, preferably a maximum of 0.8 mm, particularly preferably a maximum of 0.5 mm.

3. Flow cell (100) according to any one of the preceding claims, **characterised in that**
- the at least one first fixing agent (9) is selected from the group consisting of countersunk screws and combinations of these, the at least one first fixing agent (9) being preferably at least one countersunk screw, and/or
- the at least one second fixing agent (10) is selected from the group consisting of pan head screws, rivets, cylinder head screws and combinations of these, the at least one first fixing agent (10) being preferably at least one pan head screw.

4. Flow cell (100) according to any one of the preceding claims, **characterised in that**
- the at least one material of which the base body (1) consists of is at least one polymer, which is preferably selected from the group consisting of polyether ether ketones, polytetrafluoroethylene, polypropylene, polysulfones, polyether sulfones, polycarbonates, polyvinyl chlorides, polylactides, polyamides, thermoplastic polyurethanes, acrylonitrile-butadiene-styrene, UV-curing synthetic resins, as well as mixtures of these, and/or
- the at least one material of which the aperture (4) consists of is selected from the group consisting of metals, e.g. iron; alloys, preferably iron-containing alloys, e.g. stainless steel; polymers, e.g. polyether ether ketones; and mixtures and combinations of these, wherein the aperture (4) preferably contains or consists of stainless steel.

5. Flow cell (100) according to any one of the preceding claims, **characterised in that** the ATR crystal (7)
- contains or consists of at least one material that is at least partially transparent to light with a wavelength in the range from 2 µm to 20 µm, preferably from 4 µm to 12 µm, the ATR crystal (7) preferably containing or consisting of at least one material selected from the group consisting of silicon, diamond, germanium, zinc selenide, zinc sulphide, and mixtures and combinations thereof, the ATR crystal particularly preferably containing or consisting of silicon, and/or
- comprises multiple microprisms, and/or
- has a structure (7a) on a side facing the aperture, preferably a structure (7a) with grooves or slots.

6. Flow cell (100) according to any one of the preceding claims, **characterised in that**
- the at least first sealing element (8)
• contains or consists of at least one polymer selected from the group consisting of ethylene-propylene-diene rubbers, silicones, and mixtures thereof, and/or
• is configured in the shape of an annular ring, and/or
• is engaged in sealing contact with the ATR crystal (7) and/or the at least one first wall region of the recess (5)
and/or
- the flow cell (100) comprises at least one second sealing element (11) which is arranged around the recess (5), the at least one second sealing element (11) preferably
• containing or consisting of at least one polymer selected from the group consisting of ethylene-propylene-diene rubbers, silicones, and mixtures thereof, and/or
• is configured in the shape of an annular ring, and/or
• is at least partially arranged in a further recess provided at the first outer side of the base body (1) and arranged around the recess (5), and/or
• is engaged in sealing contact with the base body (1) and/or the aperture (4).

7. Flow cell (100) according to any one of the preceding claims, **characterised in that** the flow cell (100) comprises at least one filter element (15) which is arranged in the recess (5) between the ATR crystal (7) and at least one opening connected to the at least one inlet (2) and/or between the ATR crystal (7) and at least one opening connected to the at least one outlet (3), wherein preferably
- the at least one filter element (15) is selected from the group consisting of cellulose filter elements, paper filter elements, glass fibre filter elements, and combinations of these, and/or
- has a thickness in the range of 0.001 mm to 5 mm, preferably 0.01 mm to 1 mm, particularly preferably 0.02 mm to 0.2 mm.

8. Flow cell (100) according to claim 7, **characterised in that** the flow cell (100) additionally comprises at least one filter holder (16) to hold the at least one filter element (15), which is arranged between the ATR crystal (7) and the at least one filter element (15),
the at least one filter holder (16) preferably having a grid structure and a frame that goes around the grid structure,
- the frame being in contact with the ATR crystal (7) and the grid structure being not in contact with the ATR crystal (7), the grid structure preferably being arranged from the ATR crystal (7) at a distance of 0.001 mm to 5 mm, preferably 0.005 mm to 2 mm, particularly preferably 0.008 mm to 1 mm, more particularly preferably from 0.01 mm to 0.1 mm, and/or
- the at least one filter element (15) being clamped between the frame and at least one second wall region of the recess (5) facing the aperture (4), and/or
- a central wall region of the recess (5) facing the aperture (4) having at least one retaining element, preferably at least two retaining elements, the at least one filter element (15) being clamped between the grid structure and the at least one retaining element.

9. Flow cell (100) according to claim 7, **characterised in that** the at least one filter element (15) is arranged in direct contact with at least one photoresist coating (16) applied to the ATR crystal (7), wherein preferably
- the at least one photoresist coating (16) has a thickness in the range from 0.1 µm to 100 µm, preferably from 1 µm to 50 µm, particularly preferably from 5 µm to 20 µm, and/or
- the at least one photoresist coating (16)is applied to the ATR crystal (7) in the form of a grid or stripes, the arrangement of the photoresist coating (16) on the ATR crystal (7) being preferably adjusted to a structure of the ATR crystal (7) which the ATR crystal (7) has on a side facing the aperture (4), and/or
- the at least one filter element (15) is attached to the at least one first sealing element (8), preferably integrally connected to the at least one first sealing element (8).

10. Flow cell (100) according to any one of the preceding claims, **characterised in that** the recess (5)
- is arranged between the at least one first fixing location and the at least one second fixing location, the at least one first fixing location and the at least one second fixing location preferably having an equal distance from the recess (5), and/or
- having a structure, preferably a jagged structure, on a central wall region of the recess (5) facing the aperture (4), and/or
- having at least one opening connected to the at least one inlet (2) on a central wall region of the recess (5) facing the aperture (4), and/or
- having at least one opening connected to the at least one outlet (3) on a central wall region of the recess (5) facing the aperture (4).

11. Flow cell (100) according to any one of the preceding claims, **characterised in that** the flow cell (100) comprises at least one third fixing agent (12), preferably a single third fixing agent (12), to attach the flow cell (100) to a module main body of an optical module,
- the at least one third fixing agent (12) having a main direction of extension, an angle between this main direction of extension and the first outer side of the base body (1) lying in a range from 20° to 85°, preferably from 30° to 70°, particularly preferably from 40° to 65°, and/or
- the at least one third fixing agent (12) being selected from the group consisting of cylinder head screws, pan head screws, and combinations of these, the at least one third fixing agent (12) being preferably at least one cylinder head screw, more preferably a single cylinder head screw, and/or
- the aperture (4) having a protruding region (13) which protrudes beyond a second outer side of the base body (1), the recess (5) being preferably arranged between the second outer side of the base body (1) and the at least one third fixing agent (12), and/or
- the flow cell (100) additionally having at least one third sealing element (14) which is arranged around the at least one third fixing agent (12) and is engaged in sealing contact with the at least one third fixing agent (12).

12. Optical module (1000) comprising a module main body (200) and a flow cell (100), which is attached to the module main body, according to any one of the preceding claims.

13. Optical module (1000) according to claim 12, **characterised in that** the flow cell (100) is attached to the module main body (200) via at least one third fixing agent (12), preferably a single third fixing agent (12), and a stop element (23) arranged on an outer side of the module main body (200) facing the flow cell (100), the stop element (23) having a stop surface against which the flow cell (100) is pressed by the at least one third fixing agent (12), and preferably
- an angle between the stop surface and the first outer side of the base body (1) lying in a range from 20° to 85°, preferably from 30° to 65°, particularly preferably from 40° to 50°, and/or
- the at least one third fixing agent (12) having a main direction of extension, an angle between this main direction of extension and the first outer side of the base body (1) lying in a range from 20° to 85°, preferably from 30° to 70°, particularly preferably from 40° to 65°, and/or
- the at least one third fixing agent (12) being selected from the group consisting of cylinder head screws, pan head screws, and combinations of these, the at least one third fixing agent (12) being preferably at least one cylinder head screw, more preferably a single cylinder head screw, and/or
- the aperture (4) having a protruding region (13) which protrudes beyond a second outer side of the base body (1), the protruding region (13) being pressed against the stop surface, and the recess (5) preferably being arranged between the second outer side of the base body (1) and the at least one third fixing agent (12), and/or
- the flow cell (100) additionally having at least one third sealing element (14) which is arranged around the at least one third fixing agent (12).

14. Optical module (1000) according to claim 12 or 13, **characterised in that** the module main body (200)
- contains a lens (17) for coupling a light beam incident on the ATR crystal (7) and for decoupling a light beam reflected by the ATR crystal (7), the lens (17) preferably containing or consisting of zinc selenide, and/or
- comprises an optical window (18) arranged between the ATR crystal (7) and the lens (17), the optical window (18) preferably containing or consisting of zinc sulfide, and/or
- comprises at least one fourth sealing element (19) arranged at an outer side of the module main body (200) facing the flow cell (100), which is in sealing contact with one side of the flow cell (100) facing the module main body (200), the at least one fourth sealing element (19) preferably being configured in the form of an annular ring, and/or
- comprises a polariser (20) for polarising a light beam reflected by the ATR crystal (7) and thereafter decoupled.

15. Spectrometer comprising at least one light source, at least one light detector, as well as an optical module (1000) according to any one of claims 12 to 14, the spectrometer preferably being an FTIR spectrometer or a QCL-based infrared spectrometer.

## Revendications

1. Cellule de flux (100) pour des mesures optiques, comprenant un corps de base (1) avec au moins une entrée (2) et au moins une sortie (3) ainsi qu'une ouverture (4) agencée au niveau d'un premier côté extérieur du corps de base (1), dans laquelle un évidement (5), contenant une chambre de mesure de cellule de flux reliée à la au moins une entrée (2) et à la au moins une sortie (3), est prévu au niveau du premier côté extérieur du corps de base (1), dans laquelle le corps de base (1) est constitué d'au moins un matériau qui présente un premier coefficient de dilatation thermique, et l'ouverture (4) est constituée d'au moins un matériau qui présente un deuxième coefficient de dilatation thermique différent du premier coefficient de dilatation thermique,
dans laquelle la cellule de flux (100) comprend en outre un agencement enserré entre l'ouverture (4) et au moins une première région de paroi de l'évidement (5) et comprenant un cristal à réflectance totale atténuée ATR (7) et au moins un premier élément d'étanchéité (8) permettant d'assurer l'étanchéité de la chambre de mesure de cellule de flux, dans laquelle le au moins un premier élément d'étanchéité (8) est agencé au niveau d'un côté du cristal ATR (7) opposé à l'ouverture (4),
dans laquelle l'ouverture (4) peut être immobilisée au niveau du corps de base (1) au niveau d'au moins un premier emplacement d'immobilisation par l'intermédiaire d'au moins un premier moyen d'immobilisation (9) de sorte que le corps de base (1) et l'ouverture (4) ne peuvent essentiellement pas être déplacés l'un par rapport à l'autre au niveau du au moins un premier emplacement d'immobilisation dans une direction x parallèle au premier côté extérieur du corps de base (1), dans une direction y parallèle au premier côté extérieur du corps de base (1) et dans une direction z perpendiculaire au premier côté extérieur du corps de base (1), et
dans laquelle l'ouverture peut être immobilisée au niveau du corps de base (1) au niveau d'au moins un deuxième emplacement d'immobilisation par l'intermédiaire d'au moins un deuxième moyen d'immobilisation (10) de sorte que le corps de base (1) et
l'ouverture (4) ne peuvent essentiellement pas être déplacés l'un par rapport à l'autre au niveau du au moins un deuxième emplacement d'immobilisation dans la direction z et peuvent être déplacés l'un par rapport à l'autre dans la direction x ainsi que dans la direction y, et respectivement uniquement dans la mesure où différentes dilatations et/ou contractions des composants de la cellule de flux (100) intervenant lors de changements de température peuvent être compensées.

2. Cellule de flux (100) selon la revendication précédente, **caractérisée en ce que** l'ouverture (4) peut être immobilisée au niveau du corps de base (1) au niveau du au moins un deuxième emplacement d'immobilisation par l'intermédiaire du au moins un deuxième moyen d'immobilisation (10) de sorte que le corps de base (1) et
l'ouverture (4) ne peuvent essentiellement pas être déplacés l'un par rapport à l'autre au niveau du au moins un deuxième emplacement d'immobilisation dans la direction z et peuvent être déplacés l'un par rapport à l'autre dans la direction x ainsi que dans la direction y respectivement d'au moins 0,01 mm, de préférence d'au moins 0,05 mm, plus particulièrement de préférence d'au moins 0,1 mm, et/ou d'au plus 1 mm, plus particulièrement de préférence d'au plus 0,8 mm, plus particulièrement de préférence d'au plus 0,5 mm.

3. Cellule de flux (100) selon l'une quelconque des revendications précédentes, **caractérisée en ce que**
- le au moins un premier moyen d'immobilisation (9) est choisi dans le groupe constitué des vis à tête fraisée, ainsi que des combinaisons de celles-ci, dans laquelle le au moins un premier moyen d'immobilisation (9) est de préférence au moins une vis à tête fraisée, et/ou
- le au moins un deuxième moyen d'immobilisation (10) est choisi dans le groupe constitué des vis à tête ronde, des rivets, des vis à tête cylindrique, ainsi que des combinaisons de ceux-ci, dans laquelle le au moins un premier moyen d'immobilisation (10) est de préférence au moins une vis à tête ronde.

4. Cellule de flux (100) selon l'une quelconque des revendications précédentes, **caractérisée en ce que**
- le au moins un matériau constituant le corps de base (1) est au moins un polymère, qui est de préférence choisi dans le groupe constitué des polyétheréthercétones, du polytétrafluoroéthylène, du polypropylène, des polysulfones, des polyéthersulfones, des polycarbonates, des polychlorures de vinyle, des polylactides, des polyamides, des polyuréthanes thermoplastiques, de l'acrylonitrile-butadiène-styrène, des résines synthétiques durcissant aux UV, ainsi que des mélanges de ceux-ci, et/ou
- le au moins un matériau qui constitue l'ouverture (4) est choisi dans le groupe constitué des métaux, par exemple le fer ; des alliages, de préférence des alliages contenant du fer, par exemple l'acier inoxydable ; des polymères, par exemple les polyétheréthercétones ; ainsi que des mélanges et des combinaisons de ceux-ci, dans laquelle l'ouverture (4) contient de préférence de l'acier inoxydable ou en est constituée.

5. Cellule de flux (100) selon l'une quelconque des revendications précédentes, **caractérisée en ce que** le cristal ATR (7)
- contient, ou est constitué de, au moins un matériau qui est au moins partiellement transparent pour une lumière ayant une longueur d'onde dans la plage comprise entre 2 µm et 20 µm, de préférence comprise entre 4 µm et 12 µm, dans laquelle les cristaux ATR (7) contiennent de préférence, ou sont constitués de, au moins un matériau choisi dans le groupe constitué du silicium, du diamant, du germanium, du séléniure de zinc, du sulfure de zinc, ainsi que des mélanges et des combinaisons de ceux-ci, dans laquelle les cristaux ATR contiennent ou sont constitués de plus particulièrement de préférence de silicium, et/ou
- comprend plusieurs microprismes, et/ou
- présente une structuration (7a) au niveau d'un côté tourné vers l'ouverture, de préférence une structuration (7a) présentant des sillons ou des rainures.

6. Cellule de flux (100) selon l'une quelconque des revendications précédentes, **caractérisée en ce que**
- le au moins un premier élément d'étanchéité (8)
• contient, ou est constitué de, au moins un polymère choisi dans le groupe constitué des caoutchoucs à base d'éthylène-propylène-diène, des silicones, ainsi que des mélanges de ceux-ci, et/ou
• est réalisé sous la forme d'un anneau circulaire, et/ou
• est en contact de manière étanche avec le cristal ATR (7) et/ou avec au moins une première région de paroi de l'évidement (5)
et/ou
- la cellule de flux (100) comprend au moins un deuxième élément d'étanchéité (11) qui est agencé autour de l'évidement (5), dans laquelle le au moins un deuxième élément d'étanchéité (11) de préférence
• contient ou est constitué de, au moins un polymère choisi dans le groupe constitué des caoutchoucs à base d'éthylène-propylène-diène, des silicones, ainsi que des mélanges de ceux-ci, et/ou
• est réalisé sous la forme d'un anneau circulaire, et/ou
• est agencé au moins partiellement dans un autre évidement prévu au niveau du premier côté extérieur du corps de base (1) et agencé autour de l'évidement (5), et/ou
• est en contact de manière étanche avec le corps de base (1) et/ou avec l'ouverture (4).

7. Cellule de flux (100) selon l'une quelconque des revendications précédentes, **caractérisée en ce que** la cellule de flux (100) comprend au moins un élément filtrant (15) agencé dans l'évidement (5) entre le cristal ATR (7) et au moins un orifice relié à la au moins une entrée (2) et/ou entre le cristal ATR (7) et au moins un orifice relié à la au moins une sortie (3), dans laquelle, de préférence,
- le au moins un élément filtrant (15) est choisi dans le groupe constitué des éléments filtrants en cellulose, des éléments filtrants en papier, des éléments filtrants en fibre de verre, et de combinaisons de ceux-ci, et/ou
- présente une épaisseur dans la plage comprise entre 0,001 mm et 5 mm, de préférence compris entre 0,01 mm et 1 mm, plus particulièrement de préférence compris entre 0,02 mm et 0,2 mm.

8. Cellule de flux (100) selon la revendication 7, **caractérisée en ce que** la cellule de flux (100) comprend en outre au moins un porte-filtre (16) permettant de retenir le au moins un élément filtrant (15) et agencé entre le cristal ATR (7) et le au moins un élément filtrant (15),
dans laquelle le au moins un porte-filtre (16) présente de manière préférée une structure de grille et un cadre s'étendant autour de la structure de grille, dans laquelle
- le cadre est en contact avec le cristal ATR (7) et la structure de grille n'est pas en contact avec le cristal ATR (7), dans laquelle la structure de grille est de préférence agencée à une distance comprise entre 0,001 mm et 5 mm, de préférence comprise entre 0,005 mm et 2 mm, plus particulièrement de préférence comprise entre 0,008 mm et 1 mm, plus particulièrement de préférence comprise entre 0,01 mm et 0,1 mm, par rapport au cristal ATR (7), et/ou
- le au moins un élément filtrant (15) est enserré entre le cadre et au moins une deuxième région de paroi de l'évidement (5) tournée vers l'ouverture (4), et/ou
- une région de paroi centrale de l'évidement (5) tournée vers l'ouverture (4) présente au moins un élément de retenue, de préférence au moins deux éléments de retenue, dans laquelle le au moins un élément filtrant (15) est enserré entre la structure de grille et le au moins un élément de retenue.

9. Cellule de flux (100) selon la revendication 7, **caractérisée en ce que** le au moins un élément filtrant (15) est agencé en contact direct avec au moins un revêtement en résine photosensible (16) appliqué sur le cristal ATR (7), dans laquelle, de préférence,
- le au moins un revêtement en résine photosensible (16) présente une épaisseur dans la plage comprise entre 0,1 µm et 100 µm, de préférence comprise entre 1 µm et 50 µm, plus particulièrement de préférence comprise entre 5 µm et 20 µm, et/ou
- le au moins un revêtement en résine photosensible (16) est appliqué sous la forme d'une grille ou en bande sur le cristal ATR (7), dans laquelle l'agencement du revêtement de résine photosensible (16) sur le cristal ATR (7) est de manière préférée adapté à une structuration du cristal ATR (7) présentant le cristal ATR (7) sur un côté tourné vers l'ouverture (4), et/ou
- le au moins un élément filtrant (15) est fixé à au moins un premier élément d'étanchéité (8), de préférence est relié par complémentarité de matière au au moins un premier élément d'étanchéité (8).

10. Cellule de flux (100) selon l'une quelconque des revendications précédentes, **caractérisée en ce que** l'évidement (5)
- est agencé entre le au moins un premier emplacement d'immobilisation et le au moins un deuxième emplacement d'immobilisation, dans laquelle le au moins un premier emplacement d'immobilisation et le au moins un deuxième emplacement d'immobilisation présentent de préférence la même distance par rapport à l'évidement (5), et/ou
- présente une structuration, de préférence une structuration dentelée, au niveau d'une région de paroi centrale de l'évidement (5) tournée vers l'ouverture (4), et/ou
- présente au moins un orifice relié à la au moins une entrée (2) au niveau d'une région de paroi centrale de l'évidement (5) tournée vers l'ouverture (4), et/ou
- présente au moins un orifice relié à la au moins une sortie (3) au niveau d'une région de paroi centrale de l'évidement (5) tournée vers l'ouverture (4).

11. Cellule de flux (100) selon l'une quelconque des revendications précédentes, **caractérisée en ce que** la cellule de flux (100) comprend au moins un troisième moyen d'immobilisation (12), de préférence un troisième moyen d'immobilisation (12) individuel, permettant de fixer la cellule de flux (100) à un corps principal de module d'un module optique, dans laquelle
- le au moins un troisième moyen d'immobilisation (12) présente une direction d'extension principale, dans laquelle un angle entre ladite direction d'extension principale et le premier côté extérieur du corps de base (1) se situe dans une plage comprise entre 20° et 85°, de préférence comprise entre 30° et 70°, plus particulièrement de préférence comprise entre 40° et 65°, et/ou
- le au moins un troisième moyen d'immobilisation (12) est choisi dans le groupe constitué des vis à tête cylindrique, des vis à tête ronde et des combinaisons de celles-ci, dans laquelle le au moins un troisième moyen d'immobilisation (12) est de préférence au moins une vis à tête cylindrique, plus particulièrement de préférence une vis à tête cylindrique individuelle, et/ou
- l'ouverture (4) présente une région en saillie (13) qui dépasse d'un deuxième côté extérieur du corps de base (1), dans laquelle l'évidement (5) est de préférence agencé entre le deuxième côté extérieur du corps de base (1) et le au moins un troisième moyen d'immobilisation (12), et/ou
- la cellule de flux (100) présente en outre au moins un troisième élément d'étanchéité (14) qui est agencé autour du au moins un troisième moyen d'immobilisation (12) et qui est relié de manière étanche au au moins un troisième moyen d'immobilisation (12).

12. Module optique (1000), comprenant un corps principal de module (200) ainsi qu'une cellule de flux (100) selon l'une quelconque des revendications précédentes fixée au corps principal de module.

13. Module optique (1000) selon la revendication 12, **caractérisé en ce que** la cellule de flux (100) est fixée au corps principal de module (200) par l'intermédiaire d'au moins un troisième moyen d'immobilisation (12), de préférence d'un troisième moyen d'immobilisation (12) individuel, ainsi que d'un élément de butée (23) agencé au niveau d'un côté extérieur, tourné vers la cellule de flux (100), du corps principal de module (200), dans lequel l'élément de butée (23) présente une surface de butée contre laquelle la cellule de flux (100) est pressée grâce au au moins un troisième moyen d'immobilisation (12), et dans lequel, de préférence,
- un angle entre la surface de butée et le premier côté extérieur du corps de base (1) se situe dans une plage comprise entre 20° et 85°, de préférence comprise entre 30° et 65°, plus particulièrement de préférence comprise entre 40° et 50°, et/ou
- le au moins un troisième moyen d'immobilisation (12) présente une direction d'extension principale, dans laquelle un angle entre ladite direction d'extension principale et le premier côté extérieur du corps de base (1) se situe dans une plage comprise entre 20° et 85°, de préférence comprise entre 30° et 70°, plus particulièrement de préférence comprise entre 40° et 65°, et/ou
- le au moins un troisième moyen d'immobilisation (12) est choisi dans le groupe constitué des vis à tête cylindrique, des vis à tête ronde et des combinaisons de celles-ci, dans laquelle le au moins un troisième moyen d'immobilisation (12) est de préférence au moins une vis à tête cylindrique, plus particulièrement de préférence une vis à tête cylindrique individuelle, et/ou
- l'ouverture (4) présente une région en saillie (13) qui dépasse d'un deuxième côté extérieur du corps de base (1), dans lequel la région en saillie (13) est pressée contre la surface de butée, et dans lequel l'évidement (5) est préférence agencé entre le deuxième côté extérieur du corps de base (1) et le au moins un troisième moyen d'immobilisation (12), et/ou
- la cellule de flux (100) présente en outre au moins un troisième élément d'étanchéité (14) agencé autour du au moins un troisième moyen d'immobilisation (12).

14. Module optique (1000) selon la revendication 12 ou 13, **caractérisé en ce que** le corps principal de module (200)
- comprend une lentille (17) permettant de coupler un faisceau lumineux arrivant sur le cristal ATR (7) ainsi que permettant de découpler un faisceau lumineux réfléchi par le cristal ATR (7), dans lequel la lentille (17) contient ou est constituée de préférence de séléniure de zinc, et/ou
- comprend une fenêtre optique (18) agencée entre le cristal ATR (7) et la lentille (17), dans lequel la fenêtre optique (18) contient ou est constituée de manière préférée de sulfure de zinc, et/ou
- comprend au moins un quatrième élément d'étanchéité (19) qui est agencé au niveau d'un côté extérieur, tourné vers la cellule de flux (100), du corps principal de module (200) et qui est en contact de manière étanche avec un côté, tourné vers le corps principal de module (200), de la cellule de flux (100), dans lequel le au moins un quatrième élément d'étanchéité (19) est de manière préférée réalisé sous la forme d'une bague circulaire, et/ou
- comprend un polariseur (20) permettant de polariser un faisceau lumineux réfléchi par le cristal ATR (7) puis découplé.

15. Spectromètre, comprenant au moins une source de lumière, au moins un détecteur de lumière, ainsi qu'un module optique (1000) selon l'une quelconque des revendications 12 à 14, dans lequel le spectromètre est de préférence un spectromètre infrarouge à transformée de Fourier IRTF ou un spectromètre infrarouge à base de laser à cascade quantique QCL.
